# EUROPÄISCHE PATENTSCHRIFT

(11) **EP 0 305 885 B1**
(45) Veröffentlichungstag und Bekanntmachung des Hinweises auf die Patenterteilung: **28.04.1993**
(21) Anmeldenummer: 88113817.6
(22) Anmeldetag: 25.08.1988
(51) Int. Cl.: C08G 8/32, C08G 14/12, C09B 67/00, A01N 25/10, B01F 17/00

(54) **Harzsäureester auf Basis von Novolakoxalkylaten,ihre Herstellung und Verwendung**
Esters of resin on the basis of oxyalkylates of novolak, their fabrication and use
Esters de résine à base d'oxyalkylates de novolaque, leur fabrication et utilisation

(30) Priorität: 04.09.1987 DE 3729657
(43) Veröffentlichungstag der Anmeldung: 08.03.1989
(73) Patentinhaber: HOECHST AKTIENGESELLSCHAFT, 65926 Frankfurt am Main (DE)
(72) Erfinder: Uhrig, Heinz, D-6374 Steinbach/Taunus (DE); Ackermann, Erich, Dr., D-6233 Kelkheim (Taunus) (DE); Deubel, Reinhold, Dr., D-6232 Bad Soden am Taunus (DE)

(56) Entgegenhaltungen:
- EP-A- 0 009 648
- EP-A- 0 058 384
- EP-A- 0 065 751
- DE-C- 689 392
- US-A- 2 241 422

## Beschreibung

Die Erfindung gehört in das technische Gebiet grenzflächenaktiver Mittel, die insbesondere als Hilfsmittel bei der Herstellung von Feststoffdispersionen und Emulsionen sowie als Kupplungshilfsmittel bei der Herstellung von Azofarbmitteln oder als Färbereihilfsmittel eingesetzt werden können.

Bei der Herstellung von Dispersionen von Farbmitteln wie Pigmenten oder Dispersionsfarbstoffen werden eine Vielzahl nichtionischer, anionischer und auch kationischer Tenside benutzt. Die Art der Tenside hat einen wesentlichen Einfluß auf die Feinverteilung und damit die Farbstärke der Farbmittel in den jeweiligen Anwendungsmedien. Außerdem werden Viskosität, Glanz und Lagerstabilität maßgeblich von der Art der Tenside beeinflußt. Auch bei der Herstellung von Azofarbstoffen aus schwer löslichen Kupplungskomponenten werden üblicherweise Tenside eingesetzt, die eine gute Verteilung der Kupplungskomponente in dem Reaktionsmedium und eine vollständige Reaktion bei der Azokupplung ermöglichen.

Aus der DE-A-2 132 403 (US-A-3,775,056) und der DE-A-2 132 104 (US-A-4,009,142) sind anionische Alkylphenol-Novolak-Oxalkylatester als Dispergiermittel bekannt, die Sulfobernsteinsäurehalbester-Gruppen als anionische Gruppen enthalten.
In der DE-A-2 421 606 (US-A-3,998,652) sind nichtionische wasserlösliche Dispergiermittel beschrieben, die durch Kondensation von phenolische Hydroxygruppen enthaltenden aromatischen Verbindungen mit Formaldehyd und Aminen sowie anschließender Oxalkylierung hergestellt werden. Weiterhin sind aus der EP-A-00 58 384 (US-A-4,403,079) und EP-A-00 65 751 (US-A-4,703,077) Mischester von oxalkylierten Alkylphenol- und Alkylnaphtholnovolaken als Dispergiermittel und Kupplungshilfsmittel bekannt, bei denen als Säurekomponenten Phthalsäure, Benzoesäure, Naphthoesäure, Maleinsäure und Sulfobernsteinsäure vorkommen. Darüber hinaus werden in der EP-A-00 71 167 (US-A-4,539,128) Kühl- und Schmiermittel für spanabhebende Metallbearbeitungen beschrieben. Die Hilfsmittel können durch Veresterung von oxalkylierten Phenol- und Nonylphenolnovolaken mit Fettsäuren erhalten werden.
Die Verbindungen des genannten Standes der Technik sind schaumarme, anionische grenzflächenaktive Mittel und eignen sich als Dispergiermittel bei der Herstellung von Farbmitteldispersionen und als Netz-, Emulgier-, Egalisier-, und Färbereihilfsmittel sowie als Kühlmittel bei der Metallbearbeitung.
Die vorliegende Erfindung betrifft dazu strukturell modifizierte Verbindungen mit zum Teil erheblich verbesserten oberflächenaktiven Eigenschaften.

Gegenstand der Erfindung sind wasserlösliche Verbindungen der allgemeinen Formel (I), 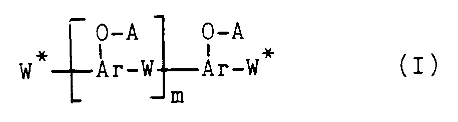
in der Ar, gleich oder verschieden von den übrigen Ar, ein Rest eines aromatischen Systems, vorzugsweise ein Benzol-, Naphthalin- oder Biphenylrest, der jeweils nicht weiter substituiert oder durch einen oder mehrere Reste aus der Gruppe gesättigtes oder ungesättigtes C₁-C₁₈-Alkyl, C₁-C₁₈-Alkoxy, C₂-C₅-Alkanoyl, C₆-C₁₀-Aryl und (C₆-C₁₀-Aryl)-C₁-C₄-Alkyl substituiert ist, vorzugsweise ein nicht weiter substituierter Arylrest oder ein durch C₁-C₁₂-Alkyl, insbesondere C₁-C₉-Alkyl, oder durch Acetyl substituierter Arylrest ist, A, gleich oder verschieden von den übrigen A, eine Gruppe der Formel -(X-O)ₙ-Y bedeutet, in der n eine ganze Zahl von 1 bis 150, vorzugsweise von 1 bis 50, insbesondere von 5 bis 25 ist, X jeweils unabhängig von den übrigen X eine Gruppe der Formel -CH₂CH₂- , -CH₂CH(CH₃)- oder -CH(CH₃)CH₂- bedeutet sowie
alle Y oder ein Teil der Reste Y, vorzugsweise 10 - 50 % der Reste Y, gleich oder verschieden voneinander, einen Acylrest einer unmodifizierten oder einer modifizierten Naturharzsäure und die übrigen Reste Y, vorzugsweise 90 - 50 % der Reste Y, gleich oder verschieden voneinander, einen Rest oder verschiedene Reste aus der Gruppe Wasserstoff, Acylrest einer gesättigten Carbonsäure mit 1 - 24 C-Atomen oder einer ungesättigten Carbonsäure mit 3 - 24 C-Atomen, vorzugsweise einer gesättigten oder ungesättigten Fettsäure mit 8 - 18 C-Atomen, einer Hydroxycarbonsäure mit 2 - 24 C-Atomen, vorzugsweise einer Hydroxyfettsäure mit 8 - 18 C-Atomen, einer Alkyl-, Alkenyl- oder Alkylidenbernsteinsäure mit jeweils 8 - 18 C-Atomen in der Seitenkette, sowie Acylreste der Formeln -CO-CH=CH-COOM, -COCH₂CH(SO₃M)-COOM, -CO-(CH₂)ₚ-COOM, -CO-C₆H₄-COOM und -SO₃M darstellen, wobei in den vorstehenden Formeln p eine Zahl von 0 - 14, vorzugsweise 2 - 6 ist und M für das Äquivalent eines Kations, vorzugsweise ein Alkalimetallkation, ein Äquivalent eines Erdalkalimetallkations, Ammonium, eine substituierte Ammoniumgruppe mit 1 - 4 C₁-C₄-Alkyl- oder C₁-C₄-Hydroxyalkylgruppen, oder eine Ammoniumgruppe, die durch Anlagerung von bis zu 150 Moläquivalenten Ethylenoxid oder Propylenoxid (oder beide) an Ammoniak oder an ein Mono-, Di- oder Trialkylamin mit 1 - 4 C-Atomen im Alkylrest erhalten wird, steht,
W, gleich oder verschieden voneinander, eine divalente Gruppe der Formel

-CHR- oder -CHR-N(R*)-T-N(R*)-CHR-

bedeutet, wobei in den vorstehenden Formeln R*, gleich oder verschieden voneinander, Wasserstoff, C₁-C₄-Alkyl, C₂-C₄-Hydroxyalkyl, einen Rest der Formel A oder -Q-O-A, vorzugsweise A darstellt und dabei A die genannte Bedeutung hat uno Q eine C₂-C₄-Alkylengruppe ist, R, gleich oder verschieden voneinander, Wasserstoff oder C₁-C₉-Alkyl, insbesondere Wasserstoff oder C₁-C₄-Alkyl darstellt und T, gleich oder verschieden voneinander, C₂-C₁₂-Alkylen, vorzugsweise C₂-C₆-Alkylen, oder C₂-C₁₂-Alkylen, das durch wenigstens eine der divalenten Gruppen -O- und -NR′-, die nicht nebeneinander stehen und worin R′ Wasserstoff, C₁-C₄-Alkyl, C₂-C₄-Hydroxyalkyl,
A oder -Q-O-A ist und dabei A und Q die genannten Bedeutungen haben, unterbrochen ist, darstellt, W*, gleich oder verschieden voneinander, Wasserstoff oder eine Gruppe der Formel -CHR-N(R*)-T-N(R*)A, in der R, R*, A und T die genannten Bedeutungen haben, und
m eine ganze Zahl von 1 - 16, vorzugsweise 3 - 8, bedeutet.

Von besonderem Interesse sind erfindungsgemäße Verbindungen der Formel (I), in der ein Teil der Reste Y aus den genannten anionischen Resten, insbesondere anionischen Resten der Formel -CO-CH=CH-COOM oder -CO-CH₂CH(SO₃M)-COOM oder beiden, vorzugsweise aus Resten der Formel -COCH₂-CH(SO₃M)-COOM besteht, wobei M in den Formeln die obengenannte Bedeutung hat.

Von besonderem Interesse sind unabhängig davon erfindungsgemäße Verbindungen der Formel (I), in der W für eine Gruppe der Formel -CHR-, in der R die genannte Bedeutung hat, vorzugsweise Wasserstoff bedeutet, X für die Gruppe der Formel -CH₂CH₂-, W* für Wasserstoff oder eine Gruppe der Formel -CHR-NA-T-NA₂, in der R, T und A die genannten Bedeutungen haben, n für eine Zahl von 1 - 50, vorzugsweise 5 - 25, und m für eine Zahl von 3 - 8 steht.

Bevorzugt sind Verbindungen der Formel (I), in der Ar ein Benzol- oder Naphthalinrest ist, der jeweils nicht weiter substituiert ist oder durch einen oder mehrere, vorzugsweise höchstens einen C₁-C₉-Alkylrest oder einen Acetylrest substituiert ist, ein Teil der Reste Y, insbesondere 20 bis 40 % der Reste Y, in den Resten A jeweils einen Acylrest einer unmodifizierten oder einer modifizierten Naturharzsäure, gegebenenfalls ein Teil der Reste Y, insbesondere 0 bis 40 % der Reste Y, jeweils einen Acylrest einer gesättigten oder ungesättigten Fettsäure mit 8 - 18 Kohlenstoffatomen oder einer Alkyl-, Alkenyl- oder Alkylidenbernsteinsäure mit 8 - 18 C-Atomen in der Seitenkette oder gegebenenfalls Wasserstoff, sowie die übrigen Reste Y, insbesondere 80 bis 20 % der Reste Y, jeweils eine Halbestergruppe der Maleinsäure, Sulfobernsteinsäure, Phthalsäure oder Schwefelsäure, insbesondere ein Acylrest der Formel -CO-CH=CH-COOM oder der Formel -COCH₂CH(SO₃M)-COOM, wobei in den Formeln M die genannte Bedeutung hat, W vorzugsweise eine divalente Gruppe der Formel -CHR-, in der R Wasserstoff oder C₁-C₄-Alkyl bedeutet, W* vorzugsweise jeweils Wasserstoff und m vorzugsweise eine ganze Zahl von 3 - 8 bedeutet.

Gegenstand der Erfindung ist auch das Verfahren zur Herstellung der erfindungsgemäßen Verbindungen der Formel (I), dadurch gekennzeichnet, daß man Verbindungen der Formel (I), in der Ar, W, W*, A, X, m und n die oben genannten Bedeutungen haben, jedoch Y jeweils Wasserstoff bedeutet, an allen oder an einem Teil der endständigen Hydroxygruppen mit unmodifizierten oder modifizierten Naturharzsäuren verestert und die übrigen endständigen Hydroxygruppen unmodifiziert läßt oder zumindest teilweise in einer ein- oder mehrstufigen Reaktion mit mindestens einer Verbindung oder einer Kombination von Verbindungen aus der Gruppe: gesättigte oder ungesättigte Carbonsäuren mit 1 - 24 C-Atomen, vorzugsweise Fettsäuren mit 8 - 18 C-Atomen, Hydroxycarbonsäuren mit 2 - 24 C-Atomen, vorzugsweise Hydroxyfettsäuren mit 8 - 18 C-Atomen, Alkyl-, Alkenyl- und Alkyliden-Bernsteinsäuren mit 8 - 18 C-Atomen in der Seitenkette, Säuren der Formeln HOOC-CH=CH-COOH, HOOC-(CH₂)ₚ-COOH, HOOC-C₆H₄-COOH, H₂SO₄, ClSO₃H, wobei p die genannte Bedeutung hat, und Anhydride der Verbindungen der vorstehend genannten Formeln, vorzugsweise SO₃ oder Maleinsäureanhydrid in Verbindung mit einer anschließenden Umsetzung mit einem Sulfit, zu den entsprechenden Ester- oder Halbestergruppen umsetzt und die erhaltenen Verbindungen in der Säureform beläßt oder vorzugsweise durch einen Austausch der sauren Wasserstoffatome gegen ein Äquivalent eines Kations, vorzugsweise ein Alkalimetallkation, ein Äquivalent eines Erdalkalimetallkations, Ammonium, eine substituierte Ammoniumgruppe mit 1 bis 4 C₁-C₄-Alkyl- oder C₁-C₄-Hydroxyalkylgruppen, oder eine Ammoniumgruppe, die durch Anlagerung von bis zu 150 Moläquivalenten Ethylenoxid oder Propylenoxid (oder beide) an Ammoniak oder an ein Mono-, Di- oder Trialkylamin mit 1 - 4 C-Atomen im jeweiligen Alkylrest erhalten wird, in die entsprechende Salzform überführt.

Die für das erfindungsgemäße Verfahren eingesetzten oxalkylierten Novolake der Formel (I), in der Y Wasserstoff bedeutet, sind nach an sich üblichen Verfahren erhältlich, beispielsweise analog den in den deutschen Offenlegungsschriften Nr. 2 132 403, 2 132 404 und 2 421 606 sowie in den europäischen Patentanmeldungs-Veröffentlichungen EP-A-58384, -65751 und -71167 beschriebenen Verfahren zur Herstellung oxalkylierter Novolake (s. S. 1 und 2 für korrespondierende US-Patentschriften).

So kann man obengenannte Novolake, in denen W eine divalente Gruppe der Formel -CHR- bedeutet, durch Kondensation von etwa (m + 1) Moläquivalenten eines oder mehrerer aromatischer Hydroxyverbindungen der Formel Ar-OH mit m Moläquivalenten von Aldehyden der Formel RCHO und anschließender Oxalkylierung herstellen. Vorzugsweise wird ein Molverhältnis Aromat : Aldehyd von 3 : 2 bis 17 : 16, insbesondere 4 : 3 bis 9 : 8, verwendet und die Kondensation in Gegenwart saurer Katalysatoren durchgeführt.

Analoge Ausgangsstoffe, in denen mindestens ein W* ein Rest der Formel -CHR-N(R*)-T-N(R*)A ist, kann man analog den vorstehend genannten Ausgangsstoffen herstellen, wobei jedoch vor der Oxalkylierung eine Kondensation mit einem Gemisch von Aldehyd RCHO und Amin der Formel (R*)NH-T-NH(R*) erfolgt, wobei R* und T die genannten Bedeutungen haben können, jedoch in der Regel nicht den Rest A oder -Q-O-A enthalten, und dabei im Gemisch das Amin im Molverhältnis 1 : 1 oder im molaren Überschuß zu dem Aldehyd RCHO eingesetzt wird.

Oxalkylierte Novolake der Formel (I), in der Y Wasserstoff und mindestens ein W eine Gruppe der Formel -CHR-N(R*)-T-N(R*)-CHR- bedeutet, können durch Kondensation der genannten aromatischen Hydroxyverbindungen Ar-OH mit einem Gemisch aus genanntem Aldehyd RCHO und genanntem Amin (R*)NH-T-N(R*)H in einer einstufigen oder mehrstufigen Verfahrensweise sowie anschließender Oxalkylierung erhalten werden. Die Menge an Aldehyd beträgt bei der einstufigen Reaktion vorzugsweise mindestens etwa ein Moläquivalent pro reaktive Aminogruppe des Amins, d. h. bei Diaminen der genannten Formel mindestens etwa die zwei-molare Menge Aldehyd pro Mol Diamin. Das Molverhältnis der aromatischen Hydroxyverbindung Ar-OH zu der Summe aus der Molmenge Diamin und der Molmenge von eventuell überschüssigem Aldehyd, der die zweifache Molmenge an Diamin übersteigt, sollte etwa (m + 1) : m gewählt werden, wobei (m + 1) die Zahl der Kerne des Novolaks bedeutet.

Bei der mehrstufigen Verfahrensweise kann die erste Stufe bevorzugt wie vorstehend beschrieben durchgeführt werden und in der zweiten Verfahrensstufe mit einem anderen Aldehyd oder Aldehyd-Amin-Gemisch umgesetzt werden. Vorzugsweise können mit einer zweiten Verfahrensstufe Endgruppen W* der Formel -CHR-N(R*)-T-N(R*)A, in der A zunächst Wasserstoff und nach weiterer Modifizierung, wie Oxalkylierung und Veresterung, die genannten Bedeutungen haben kann, durch Kondensation mit einem Gemisch von Aldehyd RCHO und Amin der Formel (R*)NH-T-N(R*)H erhalten werden, wobei das Amin im Molverhältnis 1 : 1 oder im Überschuß zu dem Aldehyd eingesetzt wird.

Die angegebenen Molverhältnisse müssen nicht genau eingehalten werden. Gewöhnlich entstehen bei der Novolak-Bildung sowieso Gemische von Novolaken mit unterschiedlicher Zahl von aromatischen Kernen pro Molekül, so daß in der Regel nur die Zahl der Kerne des Hauptprodukts anhand der Mengenverhältnisse der Ausgangsstoffe angegeben werden kann.

Als aromatische Hydroxyverbindungen Ar-OH sind hier aromatische Verbindungen zu verstehen, bei denen eine Hydroxygruppe an einen aromatischen Kern gebunden ist und damit phenolischen Charakter hat. Außerdem müssen die aromatischen Hydroxyverbindungen mindestens zwei im Sinne der Novolakbildung reaktionsfähige Positionen am aromatischen System besitzen. Derartige aromatische Hydroxyverbindungen sind beispielsweise Phenole, wie Hydroxybenzol, 1-Naphthol, 2-Naphthol, Tetrahydronaphthole, arylierte Phenole, insbesondere 4-Phenyl-phenol, 2-, 3- und 4-Methoxyphenol und -Ethoxyphenol, C-acylierte Phenole, wie 2-, 3- und 4-Acetylphenol, 2- und 4-Propionylphenol, Alkylphenole, wie 2-, 3- und 4-Monoalkylphenole mit geradkettigen oder verzweigten C₁-C₁₈-Alkylresten, insbesondere o-, m- und p-Kresol, o-, m- und p-Ethyl-, -Propyl-, -Isopropyl-, -Butyl-, -Isobutyl-, -2-Butyl-, -t-Butyl-, -Pentyl-, -Isopentyl-, -Neopentyl-, -Hexyl-, -Heptyl-, -Octyl-, -Nonyl-, -Decyl-, -Undecyl-, -Dodecyl-, -Tridecyl-, -Tetradecyl-, -Pentadecyl-, -Hexadecyl-, -Heptadecyl- und -Octadecylphenol, vorzugsweise mit geradkettigen Alkylresten, insbesondere mit C₁-C₉-Alkylresten, entsprechende Alkylnaphthole, insbesondere Octyl- und Nonylnaphthol, Dialkylphenole, wie Xylenole, Dibutyl-, Dioctyl-, Dinonyl- und Ditetradecylphenol, Dialkylnaphthole, wie Dibutyl-, Dioctyl-, Dinonyl- und Ditetradecylnaphthole. Verbindungen der Formel (I), in der Ar für eine arylalkylsubstituierte aromatische Verbindung steht, können auch durch Arylalkylierung der noch nicht oxalkylierten Novolake mit Arylalkenen - beispielsweise mit Vinylbenzol in Gegenwart von sauren Katalysatoren -hergestellt werden.
Als Beispiele für die bei der Kondensation einsetzbaren Aldehyde sind zu nennen: Formaldehyd, insbesondere eingesetzt als Formaldehyd-freisetzende Verbindungen wie Paraformaldehyd, Trioxan, Tetraoxymethylen, Formaldehyddimethylacetal und Hexamethylentetraamin, sowie Acetaldehyd oder Paraldehyd, Propionaldehyd, Butyraldehyd, Valeraldehyd, Capronaldehyd, Heptanal, Octanal und Nonanal, vorzugsweise Formaldehyd und Formaldehyd-Äquivalente wie Paraformaldehyd.

Beispiele für die Amine der Formel HN(R*)-T-N(R*)H sind Diamine wie 1,2-Diaminoethan, 1,3-Diaminopropan, 1,4-Diaminobutan, 1,5-Diaminopentan, 1,6-Diaminohexan, N,N′-Dimethylethylendiamin, N-(2-Hydroxyethyl)-ethylendiamin, N-Methylpropylendiamin, N,N′-Dimethylpropylendiamin, N-Butylpropylendiamin, N-Butylpropylendiamin, 1,8-Diaminooctan, 1,6-Diamino-2,2,4-trimethylhexan, Bis-(3-aminopropyl)-ether, Bis-(3-aminopropyl)-methylamin und vorzugsweise Diamine mit primären Aminogruppen, insbesondere 1,2-Diaminoethan, 1,3-Diaminopropan, 1,4-Diaminobutan, 1,5-Diaminopentan, 1,6-Diaminohexan.

Als saure Katalysatoren bei der Umsetzung von Aldehyden oder Aldehyden und Aminen mit den aromatischen Hydroxyverbindungen sind beispielsweise folgende Säuren geeignet: Oxalsäure, Ameisensäure, Mineralsäuren wie Schwefelsäure, Phosphorsäure und vorzugsweise Salzsäure, sowie Sulfonsäuren wie Dodecylbenzolsulfonsäure. Die Salzsäure ist wegen ihrer leichten Entfernbarkeit bei der Wasserentfernung bevorzugt. Die Säurekatalysatoren werden vorzugsweise mit einer Konzentration von 0,1 - 5 Gew.-% verwendet. Die Kondensation wird bei einer Temperatur von 20 - 150°C, bevorzugt bei 80 - 130°C, in der Regel unter Stickstoffatmosphäre durchgeführt. Zweckmäßig wird das Wasser nach der Kondensation unter vermindertem Druck abdestilliert, wobei gegen Ende bei vermindertem Druck von weniger als 66 mbar ein Wassergehalt im Harz von weniger als 0,3 % erreicht wird.

Die Oxalkylierung der Novolakharze erfolgt nach bekannten Methoden, vorzugsweise mit Alkalihydroxiden oder -alkoxiden als Katalysator, bei 100 - 200°C, insbesondere bei 140 - 180°C. Die Menge an Ethylenoxid oder Propylenoxid oder beiden wird so bemessen, daß vorzugsweise eine stabile Emulgierbarkeit oder eine völlige Löslichkeit der Anlagerungsprodukte in Wasser erreicht wird. Zweckmäßig werden an jeder Hydroxygruppe der Novolakharze sowie an jedes Wasserstoffatom der vorhandenen sekundären und primären Aminogruppen jeweils 1 bis 150, vorzugsweise 1 - 50, insbesondere 5 - 25 Moleküle Ethylenoxid oder Propylenoxid oder beide angelagert. Die Menge des angelagerten Alkylenoxids bemißt sich auch nach dem beabsichtigten Einsatzzweck und damit dem angestrebten Grad der Hydrophilie. Als Alkalihydroxid eignen sich Kaliumhydroxid oder bevorzugt Natriumhydroxid, als Alkalialkoxid Natriummethylat oder -ethylat; die Konzentration der alkalischen Katalysatoren soll bevorzugt bei 0,05 - 1,0 Gew.-%, bezogen auf Novolakharz, bei Beginn der Oxalkylierung sein. Die Oxalkylierung kann drucklos oder in Druckgefäßen mit Propylenoxid oder bevorzugt mit Ethylenoxid oder Mischungen von beiden durchgeführt werden, wobei das Alkylenoxid gasförmig oder flüssig zugeführt werden kann. Der Arbeitsdruck beträgt in der Regel 1 - 10, vorzugsweise 2 - 4 bar.

Die Veresterung der oxalkylierten Novolake erfolgt in ein oder mehreren Reaktionsstufen. So kann man in der ersten Reaktionsstufe alle oder einen Teil der Hydroxygruppen, jedoch mindestens eine Hydroxygruppe des oxalkylierten Novolaks mit einer unmodifizierten oder modifizierten Naturharzsäure oder einem reaktionsfähigen Derivat davon umsetzen, vorzugsweise mit Harzsäuren wie Abietinsäure, Dehydroabietinsäure, Tetrahydroabietinsäure, Lävopimarsäure, Dextropimarsäure und Isodextropimarsäure, wie sie in handelsüblichen Kolophoniumarten vorliegen, sowie modifizierte Harzsäuren, wie disproportionierte, hydrierte und dimerisierte Naturharzsäuren.

Für die Veresterung eignen sich auch modifizierte Naturharzsäuren, wie sie durch Umsetzung von Naturharzsäuren mit halogenabspaltenden, araliphatischen oder aromatischen Verbindungen wie Benzylchlorid, o-, m-und p-Bis-(chlormethyl)-benzol, 2-, 3- und 4-Chlormethyl-toluol, Benzalchlorid, 1- und 2-Chlormethylnaphthalin, 2-, 3- und 4-Chlorphenol, 5-Chlor-2-hydroxytoluol, 2-Chlor-5-hydroxy-1,3-xylol, 4-Chlordiphenyl, 1- und 2-Chlornaphthalin, 1-Chlor-2-naphthol und 2-Chlor-1-naphthol, oder mit cycloaliphatischen Verbindungen wie Cyclohexylchlorid in Gegenwart eines Katalysators wie Zinkchlorid bei einer Temperatur von 100 - 220°C erhalten werden, wobei auf ein Mol Harzsäure 0,5 - 1 Mol der genannten Chlorkohlenwasserstoffe eingesetzt werden.

Weiterhin eignen sich als modifizierte Naturharzsäuren für die Veresterung Harz-Phenol-Verbindungen, wie sie durch Addition von Phenolen wie Hydroxybenzol, o-, m- und p-Kresol, Orthokresolacetat, Salicylsäure, Guajacol, Bisphenol A, α-Naphthol und β-Naphthol an natürliche Harzsären oder handelsübliche Kolophoniumarten in Gegenwart von stark sauren oder säureabspaltenden Katalysatoren, wie z. B. Bortrifluorid, Chlorwasserstoff, Zinntetrachlorid, Aluminiumtrichlorid oder Mineralsäuren bei einer Temperatur von vorzugsweise 20 bis 120°C in einem organischen Medium oder in Gegenwart eines stark sauren Ionenaustauschers bei vorzugsweise 120 bis 200°C, insbesondere bei 150 bis 170°C, gewonnen werden, wobei auf ein Mol Harzsäure 0,5 bis 0,8, vorzugsweise 0,65 bis 0,75 Mol der genannten Phenole eingesetzt werden.

Die Naturharzsäuren oder modifizierten Naturharzsäuren werden nach an sich üblichen Veresterungsmethoden mit den oxalkylierten Novolaken verestert. Die Reaktionstemperatur liegt in der Regel zwischen Raumtemperatur und 240°C, je nach Veresterungsmethode. Bevorzugt wird zur Erhöhung der Ausbeute die Veresterung in einem inerten organischen Lösemittel durchgeführt, das als Schleppmittel zum Entfernen des Reaktionswassers geeignet ist. Vorzugsweise wird die Veresterung in Xylol als organischem Lösemittel und in Gegenwart von sauren Katalysatoren bei einer Temperatur von 130 - 220°C durchgeführt. Als saure Katalysatoren können Säuren und Lewissäuren wie Benzolsulfonsäure, p-Toluolsulfonsäure, Borsäure, Zinnpulver, Zinkchlorid und Schwefelsäure verwendet werden.

Die in der ersten Reaktionsstufe erhaltenen nicht-ionogenen Harzsäureester sind als solche wertvolle oberflächenaktive Mittel und können im Sinne der Erfindung eingesetzt werden. Alternativ können die erhaltenen nicht-ionogenen Harzsäureester in einer zweiten Reaktionsstufe an den übrigen Hydroxygruppen oder einem Teil der Hydroxygruppen mit gesättigten oder ungesättigen Carbonsäuren oder Hydroxycarbonsäuren, insbesondere Fettsäuren oder Hydroxyfettsäuren, wie beispielsweise Essigsäure, Propionsäure, Buttersäure, Valeriansäure, Capronsäure, Heptansäure, Octansäure, Pelargonsäure, Caprinsäure, Laurinsäure, Myristinsäure, Palmitinsäure, Stearinsäure, Arachinsäure, Behensäure, Ölsäure, Linolsäure, Talgfettsäure und Rizinolsäure, vorzugsweise die genannten Fettsäuren mit 12 - 18 C-Atomen, insbesondere wie sie als handelsübliche Fettsäuren oder Fettsäuregemische vorliegen, verestert werden. Die Veresterung mit den genannten Carbonsäuren bzw. Fettsäuren kann analog der Veresterung mit den modifizierten oder unmodifizierten Naturharzsäuren durchgeführt werden. Es ist auch möglich, die Veresterung mit den Fettsäuren vor oder zugleich mit der Veresterung mit den Harzsauren durchzuführen.

Alternativ können in der zweiten Reaktionsstufe bzw. in einer dritten Reaktionsstufe freie Hydroxygruppen mit Alkyl-, Alkenyl- oder Alkylidenbernsteinsäure bzw. -bernsteinsäureanhydriden halbverestert werden. Als α-alkylierte Bernsteinsäuren sind insbesondere solche mit geradkettigen Resten aus der Gruppe Octyl, Nonyl, Decyl, Undecyl, Dodecyl, Tridecyl, Tetradecyl, Pentadecyl, Hexadecyl, Heptadecyl und Octadecyl, die vorzugsweise eine Doppelbindung aufweisen, insbesondere eine Doppelbindung zwischen dem zweiten und dritten C-Atomen im Alkylrest aufweisen, sowie α-alkylierte Bernsteinsäuren bzw. Anhydride, in denen ein verzweigter gesättigter oder ungesättigter C₈-C₁₂-Alkylrest, insbesondere Tripropylen-oder Tetrapropylenrest vorhanden ist, geeignet. Bevorzugte α-alkylierte Bernsteinsäuren sind beispielsweise durch Umsetzung von n-Octen, n-Nonen, n-Decen, n-Undecen, n-Dodecen, n-Tridecen, n-Tetradecen, n-Pentadecen, n-Heptadecen, n-Hexadecen, n-Heptadecen, n-Octadecen, Tripropylen oder Tetrapropylen mit Maleinsäureanhydrid in Gegenwart saurer Katalysatoren erhältlich (siehe z. B. Angew. Chem. 81, S. 597 - 618 (1969), "En-Reaktion" und dort zit. Lit. sowie US-A-3306901).
Die Veresterung mit α-alkylierten Bernsteinsäureanhydriden erfolgt vorzugsweise bei 20 - 100°C, insbesondere 40 - 80°C, in Gegenwart von 0,1 - 1,0 Gew.-% Alkalihydroxiden, bezogen auf die Gesamtmischung.

Die Veresterung der oxalkylierten Novolake mit den bisher genannten Harzsäuren oder Harzsäuren in Kombination mit Carbonsäuren mit Alkylresten, vorzugsweise mit langen Alkylresten, kann alternativ auch durch Umesterung unter Einsatz der entsprechenden Alkylester, vorzugsweise Methylestern der genannten Harzsäuren oder Carbonsäuren in Gegenwart von 0,1 - 1,0 Mol-Äquivalenten Alkoholat, vorzugsweise Natriummethylat bei 150 - 200°C, vorzugsweise 160 - 190°C unter Abdestillieren des frei werdenden Alkanols bzw. Methanols erfolgen.

Die bisher genannten Harzsäureester bzw. Mischester mit Harzsäuren und Carbonsäuren der oxalkylierten Novolake werden vorzugsweise in einer weiteren Reaktionsstufe mit Dicarbonsäuren, Schwefelsäure oder Chlorsulfonsäure oder entsprechenden Anhydriden umgesetzt, so daß anionische Estergruppen eingeführt werden. Als Dicarbonsäuren oder deren Anhydride sind für die Veresterung beispielsweise geeignet: Maleinsäure, Maleinsäureanhydrid, Fumarsäure, Phthalsäure, Phthalsäureanhydrid, Isophthalsäure, Terephthalsäure, Oxalsäure, Malonsäure, Bernsteinsäure, Bernsteinsäureanhydrid, Glutarsäure, Adipinsäure, Pimelinsäure, Korksäure, Acelainsäure und Sebacinsäure. Vorzugsweise werden die anionischen Gruppen durch Reaktion von Maleinsäureanhydrid oder Phthalsäureanhydrid durch Mischung und Verrühren bei 20 - 100°C, bevorzugt bei 40 - 80°C, in Anwesenheit von Alkalihydroxiden umgesetzt. Die Konzentration der Alkalihydroxide soll 0,1 - 1,0 Gew.-%, bezogen auf die Gesamtmischung, betragen. Im Falle von Maleinsäureanhydrid ist es wegen der Sublimationsneigung vorteilhaft, in Druckgefäßen unter einem Überdruck von 0,2 - 1,0 bar Stickstoff oder Luft zu arbeiten und fir kräftiges Durchmischen zu sorgen, da zu Beginn der Reaktion das geschmolzene Maleinsäureanhydrid mit den teilveresterten Oxalkylaten schlecht mischbar ist.

Im Falle von eingeführten Maleinsäurehalbestergruppen ist es außerdem vorteilhaft, diese Halbestergruppen in die entsprechenden Sulfobernsteinsäurehalbestergruppen zu überführen. Dies gelingt beispielsweise nach Zugabe von wäßrigen Lösungen von Sulfiten oder Hydrogensulfiten zu den Verbindungen, die Maleinsäurehalbestergruppen aufweisen. Auf jede Maleinsäurehalbestergruppe werden 1,0 - 1,5, bevorzugt 1,0 - 1,1 Mol schweflige Säure in Form von Alkali- oder Erdalkalisulfiten oder -hydrogensulfiten oder -pyrosulfiten eingesetzt. Die zugesetzte Wassermenge beträgt in der Regel etwa 50 - 85 Gew.-%, bezogen auf die gesamte Lösung bzw. Mischung, und ist abhängig von der Löslichkeit der Sulfobernsteinsäurehalbestersalze und der Viskosität der Lösungen. Die Reaktionstemperatur bei der Umsetzung von Sulfiten mit den Maleinsäurehalbesterverbindungen betragen in der Regel 20 - 100°C, bevorzugt 40 - 80°C.

Während sich die Sulfite besonders zur Bildung der Dialkalisalze der Sulfobernsteinsäurehalbester eignen, ist es bei der Anlagerung von Hydrogensulfiten möglich, durch Neutralisation mit Basen wie Ammoniak, niedermolekularen Alkylaminen oder Alkylolaminen oder deren Alkylenoxidaddukten, wobei pro Mol Amin oder Alkylolamin bis zu etwa 150 Mol Ethylenoxid oder Propylenoxid oder beide angelagert und pro reaktionsfähiges Wasserstoffatom der genannten Verbindungen bis zu 150, vorzugsweise 5 - 30 Moläquivalenten Ethylenoxid oder Propylenoxid oder beide angelagert sind, den Grad der Hydrophilie zusätzlich zu beinflussen. Als Vertreter der Alkylamine oder Alkylolamine seien genannt: Ethylamin, Propylamin, Isopropylamin, Butylamin, Isobutylamin, Monoethanolamin, Monopropanolamin, Monoisopropanolamin, Monobutanolamin, Monoisobutanolamin, Diethanolamin, Dipropanolamin, Dibutanolamin, Triethanolamin, Tripropanolamin oder Tributanolamin sowie Di- und Polyamine wie Ethylendiamin, Ethylentriamin, Triethylentetramin, Propylendiamin, Dipropylendiamin, Dipropylentriamin oder Tripropylentetramin.

Der am Beispiel der Sulfobernsteinsäurehalbester beschriebene Kationenaustausch kann auch bei den Verbindungen der Formel (I) erfolgen, die andere anionische Gruppen aufweisen. Dabei werden die Verbindungen in ihrer Säureform eingesetzt und in analoger Weise durch Neutralisation mit den obengenannten Aminen oder anorganischen Basen in die entsprechenden Salze überführt. Auch andere übliche Kationenaustauschverfahren können angewendet werden.

Die Sulfatierung freier Hydroxygruppen der oxalkylierten und partiell veresteren Novolake kann nach bekannten Verfahren erfolgen, wobei als Sulfatierungsreagens beispielsweise Schwefelsäure, Chlorsulfonsäure, Amidosulfonsäure, mit Inertgas verdünntes SO₃-Gas oder ein SO₃-Addukt, z. B. SO₃-Dioxan, verwendet werden kann. Die Sulfatierung erfolgt unter guter Durchmischung, erforderlichenfalls unter Zusatz eines inerten Verdünnungsmittels, beispielsweise Methylenchlorid. Je nach Sulfatierungsmittel werden dabei Temperaturen von 0 bis etwa 150°C eingehalten. Die Menge des einzusetzenden Sulfatierungsagens kann so bemessen werden, daß noch alle freien Hydroxygruppen oder nur ein Teil davon umgesetzt werden.

Während bei der Sulfatierung mit Amidosulfonsäure die Ammoniumsalze der Schwefelsäurehalbester anfallen, entstehen bei der technisch interessantesten Ausführungsform mit gasförmigen Schwefeltrioxid in Mischung mit Inertgas sowie auch bei der Sulfatierung mit Chlorsulfonsäure die Schwefelsäurehalbester in der Säureform, aus denen leicht die gewünschten Salze durch Neutralisation mit entsprechenden anorganischen oder organischen Basen hergestellt werden können. Zu dieser Neutralisation werden bevorzugt die Alkalihydroxide eingesetzt, die zu den sehr gut wasserlöslichen Alkalisalzen der erfindungsgemäßen Schwefelsäurehalbester führen.

Gegenstand der Erfindung ist außerdem die Verwendung der erfindungsgemäßen Verbindungen der Formel (I) als grenzflächenaktive Mittel. Bei den erfindungsgemäßen Verbindungen oder ihren Gemischen handelt es sich um Substanzen, die aufgrund ihrer günstigen oberflächenaktiven Eigenschaften äußerst vielseitig einsetzbar sind. So ergeben sie in Wasser stabile Emulsionen oder sind in Wasser klar löslich. Sie senken die Oberflächenspannung nach der Ringabreißmethode (DIN 53914) und sind nach dem Ross-Miles Test (DIN 53902) schaumarm bis nahezu schaumfrei. Außerdem netzen sie Baumwollgewebe nach der Tauchnetzmethode (DIN 53901) und sind gegen Alkali sowie starke Säuren unter üblichen Anwendungsbedingungen der Tenside beständig. Die erfindungsgemäßen Substanzen können sowohl als Emulgatoren als auch als Dispergiermittel für die verschiedensten Anwendungsbereiche verwendet werden. Dies gilt vor allem für die Anwendung als Kupplungshilfsmittel oder Präparationsmittel oder beides bei der Herstellung von Azoverbindungen, insbesondere von Azopigmenten. Außerdem sind sie geeignet als Dispergiermittel bei der Herstellung von Farbmitteldispersionen, vorzugsweise Dispersionsfarbstoffen, ferner für die Formulierung von Pigmentpräparationen, Pflanzenschutz- und Schädlingsbekämpfungsmitteln, Carrieremulsionen sowie als Egalisier- und Färbereihilfsmittel. Die Produkte sind biologisch abbaubar.

Die erfindungsgemäßen Verbindungen können einzeln oder als Gemische sowie in Kombinationen mit anderen nicht-ionogenen anionischen oder kationaktiven Tensiden oder Gemischen davon eingesetzt werden. Weiterhin können sie zusammen mit Gerüstsubstanzen oder anderen üblichen Zusätzen oder Hilfsstoffen zur Anwendung kommen.

In den folgenden Beispielen beziehen sich "Teile" auf das Gewicht, Volumenteile (oder Volumteile) verhalten sich zu Gewichtsteilen wie Kilogramm zu Liter. Druckangaben bedeuten "Überdruck", bezogen auf Atmosphärendruck, sofern nichts anderes angegeben ist.

### 1. Herstellung der Novolake

1.1) 7-Kern-Nonylphenol-Novolak: 1540 Teile Nonylphenol, 189,5 Teile Paraformaldehyd und 10,9 Teile 4-Dodecylbenzolsulfonsäure werden bei Raumtemperatur gemischt und unter Stickstoffatmosphäre 14 Stunden lang unter Rückfluß gerührt. Danach wird die Innentemperatur bis auf 135°C gesteigert und innerhalb von 4 Stunden das Reaktionswasser abdestilliert. Anschließend wird unter vermindertem Druck von etwa 20 - 30 mbar zwei Stunden bei 135 - 140°C nachgerührt. Man erhält 1606 Teile eines hellgelben spröden Harzes.

1.2) 9-Kern-Nonylphenol-Novolak: 1980 Teile Nonylphenol, 252,7 Teile Paraformaldehyd, 13,9 Teile 4-Dodecylbenzolsulfonsäure werden analog Verbindung 1.1 15 Stunden am Rückfluß gerührt und wie dort beschrieben aufgearbeitet. Man erhält 2077 Teile Harz.

1.3) 7-Kern-p-Kresol-Novolak: 728 Teile p-Kresol werden mit 189,5 Teilen Paraformaldehyd und 4,3 Teilen konzentrierter Salzsäure analog Beispiel 1.1 15 Stunden unter Rückfluß gerührt und wie angegeben aufgearbeitet. Man erhält 750 Teile Novolakharz.

1.4) 4-Kern-Novolak: 440 Teile Nonylphenol und 174 Teile Hexamethylendiamin werden 3 Stunden unter Überlagerung von Stickstoffatmosphäre bei einer Innentemperatur von 50 - 60°C gerührt und vermischt. Danach werden 90 Teile Paraformaldehyd innerhalb von 3 Stunden portionsweise zugegeben und gut verrührt. Nach Zutropfen einer Lösung aus 1,3 Teilen Dodecylbenzolsulfonsäure und 9 Teilen Wasser wird nach einer Nachrührzeit von 60 Minuten die Innentemperatur auf 90°C gesteigert und 5 Stunden unter Abdestillieren des Reaktionswassers kondensiert. Dann wird der Druck auf 20 - 30 mbar reduziert und 3 Stunden bei 90 - 100°C nachgerührt. Man erhält als Ausbeute 600 Teile eines hellrotbraunen festen Novolakharzes.

1.5) 5-Kern-Nonylnaphthol-Novolak: 1350 Teile Nonyl-β-naphthol werden vorgelegt und bei Raumtemperatur unter langsamem Rühren 132 Teile Paraformaldehyd eingetragen. Unter Überlagerung mit Stickstoffgas wird eine Stunde bei 50°C gerührt und nach Erhöhung der Innentemperatur auf 90°C mit 15,1 Teilen konzentrierter Salzsäure tropfenweise versetzt. Danach wird 10 Stunden bei 110°C bei gleichzeitigem Durchleiten von Stickstoffgas gerührt und nach Steigerung der Innentemperatur auf 135 - 140°C das Reaktionswasser innerhalb von 4 Stunden weitgehend entfernt. Nach Reduzieren des Druckes auf etwa 20 - 30 mbar läßt man noch 2 Stunden bei 135 - 140°C nachrühren. Nach dem Erkalten erhält man 1330 Teile dunkel gefärbtes, rotbraunes festes Harz.

1.6) 5-Kern-p-Phenylphenol-Novolak: 425 Teile p-Phenylphenol werden vorgelegt und bei einer Innentemperatur von 60 - 75°C unter langsamem Rühren innerhalb von 2 Stunden 60 Teile Paraformaldehyd portionsweise eingetragen. Unter Stickstoffgasatmosphäre wird eine Stunde lang bei 75°C gerührt und nach Erhöhung der Innentemperatur auf 120°C eine Lösung aus 22,2 Teilen Dodecylbenzolsulfonsäure in 7 Teilen Wasser zugetropft. Danach läßt man 10 Stunden bei 120 - 130°C unter Durchleiten von Stickstoffgas rühren, wobei das Reaktionswasser weitgehend entfernt wird. Nach Reduzieren des Druckes auf etwa 20 - 30 mbar läßt man noch 2 Stunden bei 120 - 130°C rühren. Nach dem Erkalten erhält man ein sprödes, grünbraunes, festes Novolakharz.
Ausbeute: etwa 410 Teile Novolak.

1.7) Styrolisierter 7-Kern-Phenol-Novolak: Zu 349 Teilen Phenol werden innerhalb von 2 Stunden bei 50 - 75°C Innentemperatur 95,5 Teile Paraformaldehyd unter Rühren langsam zugegeben. Nach einer weiteren Stunde Rühren wird die Innentemperatur auf 120 - 125°C erhöht und innerhalb von 1,5 Stunden eine Lösung von 2 g Dodecylbenzolsulfonsäure in 10 ml Wasser zugetropft. Die Innentemperatur wird danach auf 130 - 135°C gesteigert und während 5 Stunden das Reaktionswasser und 22,5 Teile Phenol unter reduziertem Druck abdestilliert. Anschließend läßt man noch 3 Stunden bei einem Druck von 20 - 30 mbar rühren. Nach absinkender Innentemperatur auf 120 - 125°C werden 5 Teile Oxalsäure zugegeben und innerhalb von 4 - 5 Stunden 339 Teile Vinylbenzol unter Stickstoffgasatmosphäre zugetropft. Nach Rühren für weitere 3 Stunden bei 130 - 135°C erhält man 600 Teile eines gelbroten festen Novolakharzes.

1.8) 5-Kern-Novolak auf Basis von 4-Hydroxyacetophenon: 200 Teile 4-Hydroxyacetophenon werden mit einem Katalysatorgemisch aus 1 Teil Oxalsäure und 0,5 Teilen Dodecylbenzolsulfonsäure bei 90 bis 100°C Innentemperatur gut gemischt und eine weitere Stunde unter Überlagerung von Stickstoffgas nachgerührt. Nach Steigerung der Innentemperatur auf 100°C bis 110°C werden innerhalb 1 Stunde 116,4 Teile einer 36%igen wäßrigen Formaldehydlösung zugetropft und unter Durchleiten von Stickstoffgas nach 2 Stunden bei 100 bis 110°C nachgerührt. Nach Steigerung der Innentemperatur auf 120 bis 130°C wird das Reaktionswasser innerhalb 1 bis 2 Stunden weitgehend entfernt. Nach Reduzieren des Drucks auf 20 bis 30 mbar läßt man noch etwa 1 Stunde bei 130 bis 135°C nachrühren. Nach dem Erkalten erhält man 215 Teile hellgefärbtes gelbbraunes festes Harz.

1.9) 7-Kern-4-Hydroxyacetophenon-Novolak: 300 Teile 4-Hydroxyacetophenon werden mit 1.5 Teilen Oxalsäure und 0,75 Teilen Dodecylbenzolsulfonsäure innerhalb 1 Stunde bei 90 bis 100°C Innentemperatur gut verrührt und nach Zugabe von 173.3 Teilen einer 36 %igen wäßrigen Formaldehydlösung analog Beispiel 1.8) aufgearbeitet. Man erhält 320 Teile Novolakharz.

### 2. Herstellung der Novolak-Oxalkylate

2.1) 200 Teile Novolak 1.1 werden nach Zugabe von 1,2 Teilen pulverisiertem Ätznatron unter Rühren und Zuführen von 569 Teilen Ethylenoxid unter Aufrechterhaltung eines Druckes von 2 - 4 bar und einer Temperatur von 150 - 160°C oxethyliert. Nachdem alles Ethylenoxid in das Reaktionsgefäß gedrückt worden ist, läßt man noch eine Stunde bei 150 - 160°C rühren. Das erhaltene Produkt ist ein oxethylierter 7-Kern-Novolak mit 105 Ethylenoxy-Einheiten pro Molekül und mit einer Hydroxylzahl von 69. Die Hydroxylzahl ist ein Maß für den Gehalt an freien Hydroxylgruppen im Molekül; sie entspricht der Menge an Kaliumhydroxid in mg, welche notwendig ist, um die Menge Essigsäure zu neutralisieren, die bei der Veresterung (Acetylierung) von 1 g der Prüfsubstanz verbraucht wird.

2.2) 200 Teile 7-Kern-Novolak 1.1 werden unter Zugabe von 4,5 Teilen Natriummethylat in einem Druckgefäß unter Rühren und Zuführen von 333 Teilen Propylenoxid und 524 Teilen Ethylenoxid bei 145 - 170°C unter Aufrechterhaltung eines Druckes von etwa 3,4 - 5 bar oxalkyliert. Nachdem alles Alkylenoxid in das Druckgefäß gepreßt worden ist, läßt man noch eine Stunde bei 150 -160°C rühren. Das erhaltene Harz-Oxalkylat enthält als Hauptprodukt einen oxalkylierten 7-Kern-Nonylphenol-Novolak mit im Mittel 48,3 Propylenoxy-Einheiten und 96,7 Ethylenoxy-Einheiten pro Molekül. Das Produkt hat eine Hydroxyzahl von 45 - 46.

2.3) 200 Teile Novolak 1.2 werden nach Zusatz von 1,0 Teilen Natriumhydroxid mit 567,8 Teilen Ethylenoxid oxethyliert, wie es bei Beispiel 2.1 beschrieben ist. Das erhaltene Produkt entspricht in der Hauptsache einem 9-Kern-Novolakoxethylat mit 135 Ethylenoxy-Einheiten pro Molekül und eine Hydroxylzahl von 63.

2.4) 200 Teile Novolak 1.3 werden nach Zugabe von 1,0 Teilen pulverisiertem Ätznatron mit 569 Teilen Ethylenoxid analog Beispiel 2.1 umgesetzt. Das erhaltene Produkt enthält als Hauptbestandteil ein 7-Kern-Novolak-Oxethylat mit im Mittel 54.3 Ethylenoxy-Einheiten pro Molekül und eine Hydroxylzahl von 126.

2.5) 200 Teile 5-Kern-Novolak 1.5 werden nach Zugabe von 1,1 Teilen frisch pulverisiertem Ätznatron in einem Druckgefäß unter Rühren und Zuführen von 596 Teilen Ethylenoxid bei 160 - 170°C unter Aufrechterhalten eines Druckes von 2 - 4 bar oxethyliert. Nach dem Aufdrücken des Ethylenoxids läßt man noch eine Stunde bei 160 - 170°C nachrühren. Das erhaltene zähflüssige Oxethylat enthält 95 Ethylenoxy-Einheiten pro Molekül und besitzt eine Hydroxylzahl von 51.

2.6) 200 Teile 4-Kern-Novolak 1.4 werden nach Zugabe von 6 Teilen Natriummethylat (30 %ig in Methanol) in einem mit Stickstoffgas gespültem Druckgefäß unter Rühren auf 70 - 80°C erwärmt und das Methanol unter reduziertem Druck abgezogen. Nach Erhöhung der Temperatur auf 140 - 150°C und einem Druck von 2 - 4 bar wird mit 569 Teilen Ethylenoxid oxethyliert. Das erhaltene zähflüssige Oxethylat enthält im Mittel 83,3 Ethylenoxy-Einheiten pro Molekül und hat eine Hydroxylzahl von 46.

2.7) 200 Teile 5-Kern-Phenylphenol-Novolak 1.6 werden in einem Druckgefäß vorgelegt und geschmolzen. Nach Zugabe von 2 Teilen frisch pulverisiertem Natriumhydroxid wird analog Beispiel 2.6 unter Stickstoffatmosphäre mit 579 Teilen Ethylenoxid oxethyliert. Das erhaltene zähflüssige grüne Novolakethylat enthält im Mittel 60 Ethylenoxy-Einheiten pro Molekül und hat eine Hydroxylzahl von 79.

2.8) 200 Teile 9-Kern-Novolak 1.7 werden nach Zugabe von 9 Teilen Natriummethylat (30 %ig in Methanol) in einem Druckgefäß unter Rühren auf 80 - 90°C erhitzt und unter reduziertem Druck das Methanol abgezogen. Nach Erhöhung der Innentemperatur auf 150 - 170°C werden 561,3 Teile Ethylenoxid bei einem Druck von 4 - 6 bar aufgepreßt. Danach läßt man noch eine Stunde bei 150 - 160°C rühren. Das erhaltene wachsartige braune Harzoxethylat enthält im Mittel 96,3 Ethylenoxy-Einheiten pro Molekül und besitzt eine Hydroxylzahl von 69.

2.9) 200 Teile Novolak 1.2 werden nach Zusatz von 1,0 Teilen Natriumhydroxid mit 839 Teilen Ethylenoxid oxethyliert, wie es bei Beispiel 2.1 beschrieben ist. Das erhaltene Produkt entspricht in der Hauptsache einem 9-Kern-Novolakoxethylat mit 200 Ethylenoxy-Einheiten pro Molekül und mit einer Hydroxylzahl von 47.

2.10) 200 Teile Novolak 1.8 werden nach Zusatz von 1,0 Teilen Natriumhydroxid mit 419 Teilen Ethylenoxid oxethyliert, wie es bei Beispiel 2.1 beschrieben ist. Das erhaltene Produkt entspricht in der Hauptsache einem 5-Kern-Novolakoxethylat mit 35 Ethylenoxy-Einheiten pro Molekül und mit einer Hydroxyzahl von 123.

2.11) 300 Teile Novolak 1.9 werden nach Zugabe von 1,0 Teilen pulverisiertem Ätznatron mit 853 Teilen Ethylenoxid analog Beispiel 2.1 umgesetzt. Das erhaltene Produkt enthält als Hauptbestandteil ein 7-Kern-Novolak-Oxethylat mit im Mittel 67 Ethylenoxy-Einheiten pro Molekül und einer Hydroxyzahl von 98.

### 3. Herstellung der Ester der oxalkylierten Novolake

3.1) 300 Teile 7-Kern-Oxethylat aus Beispiel 2.1 werden mit 58 Teilen Kolophonium auf 70 - 80°C erwärmt und unter Stickstoffgas eine Stunde lang gerührt. Nach Zugabe von 6 Teilen Zinnpulver, 1,5 Teilen p-Toluolsulfonsäure und 150 ml Xylol wird 16 Stunden lang auf 150 - 160°C erhitzt und das Reaktionswasser durch Auskreisen entfernt. Danach wird das Xylol abdestilliert. Das Produkt hat eine Säurezahl (DIN 53185) von weniger als 20. Es werden nun 14,0 Teile Maleinsäureanhydrid zugesetzt, und weitere 3 Stunden bei 70 - 80°C unter Stickstoffgas erhitzt. Zu dem erhaltenen Maleinsäurehalbester-Produkt läßt man eine Lösung aus 18,6 Teilen Natriumsulfit in 523 Teilen Wasser zulaufen und zwischen 1 und 2 Stunden bei 70 - 80°C so lange rühren, bis der Ansatz klar wasserlöslich geworden ist. Die Menge des mit der Natriumsulfitlösung zugesetzten Wassers kann 50 - 85 Gew.-% der erhaltenen Produktlösung betragen. Das Hauptprodukt ist ein 7-Kern-Novolak-Oxethylat-Mischester, bei dem 4 Polyoxyethylenketten mit Harzsäuren verestert und 3 mit Sulfobernsteinsäure halbverestert sind.

3.2) 500 Teile 7-Kern-Oxalkylat aus Beispiel 2.2 und 71,7 Teilen partiell hydriertes Kolophonium werden zusammen auf 70 - 80°C erwärmt und eine Stunde lang unter Stickstoffgas gut vermischt. Nach Zugabe von 2,5 Teilen p-Toluolsulfonsäure, 10 Teilen Zinnpulver und 150 ml Xylol erhitzt man für 16 Stunden bei 150 - 160°C am Wasserabscheider, wobei das Reaktionswasser ständig ausgekreist wird. Nach Abdestillieren des Xylols wird eine Säurezahl von unter 5 festgestellt. Daraufhin werden 17 Teile Maleinsäureanhydrid zugesetzt, und für weitere 3 Stunden bei 70 - 80°C unter Stickstoffgas erwärmt. Anschließend läßt man eine Lösung aus 22 Teilen Natriumsulfit und 523 Teilen Wasser zulaufen, rührt 1 bis 2 Stunden bei 70 - 80°C, bis der Ansatz klar wasserlöslich geworden ist. Die Menge des verwendeten Wassers kann zwischen 50 und 85 % der erhaltenen Lösung des Produkts betragen. Das Hauptprodukt ist ein Mischester eines oxethylierten 7-Kern-Novolaks, bei dem 4 Polyoxyethylenketten endständig mit Harzsäureestergruppen und 3 mit Sulfobernsteinsäurehalbestergruppen modifiziert sind.

3.3) 500 Teile Oxethylat aus Beispiel 2.3 werden nach Zugabe von 37,9 Teilen disproportionierten Kolophonium analog Beispiel 3.1 mit 2,5 Teilen p-Toluolsulfonsäure und 10 Teilen Zinnpulver bis zu einer Säurezahl von 18 verestert und anschließend mit 43,1 Teilen Maleinsäureanhydrid sowie anschließend einer Lösung aus 55,3 Teilen Natriumsulfit in 500 Teilen Wasser umgesetzt. Die Menge des verwendeten Wassers kann zwischen 50 und 85 % der fertigen Produktlösung betragen. Das erhaltene Hauptprodukt ist ein Mischester eines oxethylierten 9-Kern-Novolaks, bei dem 2 Polyoxyethylenketten endständig Harzsäureestergruppen und 7 Polyoxyethylenketten Sulfobernsteinsäurehalbestergruppen aufweisen.

3.4) 500 Teile Oxethylat aus Beispiel 2.3 werden nach Zugabe von 94,8 Teilen disproportieniertem Kolophonium mit 2,5 Teilen p-Toluolsulfonsäure und 10 Teilen Zinnpulver analog Beispiel 3.3 verestert und mit 24,6 Teilen Maleinsäureanhydrid und anschließend 26 Teilen Natriumhydrogensulfit in 700 Teilen Wasser umgesetzt. Danach wird mit 92,2 Teilen eines Produkts aus Triethanolamin und 30 Mol Ethylenoxid neutralisiert. Die fertige Produktlösung kann durch Variation der Menge an verwendetem Wasser auf einen Wassergehalt von 50 - 85 % eingestellt werden. Das Hauptprodukt der Herstellung ist ein Mischester eines oxethylierten 9-Kern-Novolaks, bei dem 5 Polyoxyethylenketten mit Harzsäure verestert sind und 4 Polyoxyethylenketten mit Sulfobernsteinsäure halbverestert sind.

3.5) 500 Teile Oxethylat 2.3 werden nach Zugabe von 37,9 Teilen disproportioniertem Kolophonium und 35,0 Teilen Ölsäure in Gegenwart von 2 Teilen p-Toluolsulfonsäure und 4 Teilen Zinnpulver analog Beispiel 3.3 verestert. Anschließend setzt man analog Beispiel 3.3 mit 30,8 Teilen Maleinsäureanhydrid und daraufhin mit 39,5 Teilen Natriumsulfit in 600 Teilen Wasser um. Das Hauptprodukt ist ein Mischester eines oxethylierten 9-Kern-Novolaks, bei dem 2 Polyoxyethylenketten mit Harzsäure und 2 mit Ölsäure verestert sowie 5 mit Sulfobernsteinsäure halbverestert sind.

3.6) 500 Teile Oxethylat aus Beispiel 2.6 werden analog Beispiel 3.1 mit 61 Teilen Kolophonium verestert und anschließend mit 19,7 Teilen Maleinsäureanhydrid und daraufhin mit 25,3 Teilen Natriumsulfit in 400 Teilen Wasser umgesetzt. Die Menge an verwendetem Wasser kann zweckmäßig auch so variiert werden, daß ein Wassergehalt zwischen 50 und 85 % in der Lösung des Produkts eingestellt wird. Das Hauptprodukt ist ein Mischester eines oxethylierten 4-Kern-Novolaks, bei dem 2 Polyoxyethylenketten endständig Harzsäureestergruppen und 2 Ketten Sulfobernsteinsäurehalbestergruppen aufweisen.

3.7) 500 Teile Oxethylat aus Beispiel 2.4 werden analog Beispiel 3.1 mit 141,5 Teilen disproportioniertem Kolophonium verestert und anschließend mit 61,0 Teilen Maleinsäureanhydrid und daraufhin mit 78,7 Teilen Natriumsulfit in 400 Teilen Wasser umgesetzt. Das Hauptprodukt ist ein Mischester eines oxethylierten 7-Kern-Novolaks, bei dem 3 Polyoxyethylenketten mit Harzsäure verestert und 4 Polyoxyethylenketten mit Sulfobernsteinsäure halbverestert sind.

3.8) 500 Teile Oxethylat aus Beispiel 2.5 werden analog Beispiel 3.1 mit 45,9 Teilen disproportioniertem Kolophonium verestert und anschließend mit 22,3 Teilen Maleinsäureanhydrid sowie danach mit einer Lösung aus 28,7 Teilen Natriumsulfit in 800 Teilen Wasser umgesetzt, wobei durch Variation der Wassermenge ein Wassergehalt der fertigen Lösung zweckmäßig zwischen 50 und 80 Gew.-% eingestellt werden kann. Das Hauptprouukt ist ein Mischester eines oxethylierten 5-Kern-Novolaks, bei dem 2 Polyoxyethylenketten mit Harzsäure verestert und 3 mit Sulfobernsteinsäure halbverestert sind.

3.9) 300 Teile Oxethylat aus Beispiel 2.7 werden analog Beispiel 3.1 mit 51,0 Teilen disproportioniertem Kolophonium verestert, anschließend mit 24,9 Teilen Maleinsäureanhydrid und daraufhin mit 31,9 Teilen Natriumsulfit (in 500 Teilen Wasser) umgesetzt. Das Hauptprodukt ist ein Mischester eines oxethylierten 5-Kern-Novolaks, bei dem 2 Polyoxyethylenketten endständig mit Harzsäureestergruppen und 3 mit Sulfobernsteinsäurehalbestergruppen modifiziert sind.

3.10) 300 Teile Oxethylat aus Beispiel 2.8 werden analog Beispiel 3.1 mit 31,8 Teilen handelsüblichem Kolophonium verestert. Anschließend wird ein Gemisch aus 14,5 Teilen eines 2-(C₁₂-Alk-4-enyl)-Bernsteinsäureanhydrids und 20,6 Teile Maleinsäureanhydrid zugesetzt und 3 Stunden bei 70 - 80°C unter Stickstoffgas gerührt. Anschließend läßt man eine Lösung aus 26,5 Teilen Natriumsulfit in 400 Teilen Wasser bei 80 - 90°C zulaufen, 1 bis 2 Stunden bei 70 - 80°C rühren, bis der Ansatz klar wasserlöslich ist. Die erhaltene Lösung des Produkts kann durch Variation der Mange an verwendetem Wasser einen Wassergehalt zwischen 50 - 80 % aufweisen. Das Hauptprodukt ist ein Mischester eines oxethylierten 7-Kern-Novolaks, bei dem 2 Polyoxyalkylenketten mit Harzsäure verestert sind, sowie eine Kette mit einer Alkenylbernsteinsäure und 4 Ketten mit Sulfobernsteinsäure halbverestert sind.

3.11) 300 Teile Oxethylat aus Beispiel 2.1 und 43,5 Teile disproportioniertes Kolophonium werden analog Beispiel 3.1 umgesetzt. Nach Zugabe von 250 ml Methylenchlorid werden 22,4 Teile Chlorsulfonsäure bei 15 - 20°C zugetropft, wobei man einen schwachen Strom trockenen Stickstoffgases durch die Lösung leitet und damit den gebildeten Chlorwasserstoff entfernt. Gegen Ende der Reaktion wird auf 30°C erwärmt und gerührt, bis kein Chlorwasserstoffgas mehr entweicht. Nach Abdestillierung des Methylenchlorids unter vermindertem Druck bei etwa 30°C werden zunächst 400 Teile Wasser und anschließend zur Neutralisation 23,1 Teile 33 %ige Natronlauge zugetropft. Der Wassergehalt der fertigen Lösung des Produkts soll zwischen 50 und 85 % betragen.

Das Produkt ist ein Mischester eines oxethylierten 7-Kern-Novolaks, bei dem 3 Polyoxyethylenketten mit Harzsäure und 4 mit Schwefelsäure verestert sind.

3.12) 500 Teile Oxethylat aus Beispiel 2.3 werden nach Zugabe von 37,9 Teilen disproportioniertem Kolophonium entsprechend Beispiel 3.1 mit 2,5 Teilen p-Toluolsulfonsäure und 10 Teilen Zinnpulver bis zu einer Säurezahl von 16 verestert und anschließend in Gegenwart von 0,5 Teilen pulverisiertem Ätznatron mit 65 Teilen Phthalsäureanhydrid innerhalb von 5 Stunden bei 80 - 90°C umgesetzt. Durch Zugabe von 1117 Teilen Wasser wird ein Wassergehalt von 65 % in der fertigen Lösung eingestellt. Das Produkt ist ein Mischester eines oxethylierten 9-Kern-Novolaks, bei dem 2 Polyoxyethylenketten mit Harzsäure verestert und 7 mit Phthalsäure halbverestert sind.

3.13) 300 Teile Oxethylat aus Beispiel 2.9 werden mit 74,8 Teilen Kolophonium auf 70 - 80°C erwärmt und unter Stickstoffgas eine Stunde lang gerührt. Nach Zugabe von 10 Teilen Zinnpulver, 1,5 Teilen p-Toluolsulfonsäure und 150 ml Xylol wird 16 Stunden lang auf 150 - 160°C erhitzt und das Reaktionswasser durch Auskreisen entfernt. Danach wird das Xylol abdestilliert. Das Produkt hat eine Säurezahl (DIN 53185) von weniger als 20 und enthält als Hauptprodukt einen Ester des oxethylierten 3-Kern-Novolaks, bei dem die 9 Polyoxyethylenketten entständig mit Harzsäuregruppen verestert sind.

3.14) 300 Teile Oxethylat aus Beispiel 2.9 werden nach Zugabe von 41,6 Teilen disproportioniertem Kolophonium analog Beispiel 3.13) mit 1,5 Teilen p-Toluolsulfonsäure mit 10 Teilen Zinnpulver bis zu einer Säurezahl von 19 verestert. Bei dem erhaltenen Hauptprodukt sind von 9 Polyoxyethylenketten 5 endständige Hydroxygruppen mit Harzsäure verestert.

3.15) 300 Teile Oxethylat aus Beispiel 2.10 werden nach Zugabe von 79.1 Teilen disproportioniertem Kolophonium analog Beispiel 3.13) mit 1,5 Teilen p-Toluolsulfonsäure und 10 Teilen Zinnpulver bis zu einer Säurezahl von 18 verestert. Bei dem erhaltenen Hauptprodukt sind von 5 Polyoxyethylenketten 2 endständig mit Harzsäure verestert.

3.16) 500 Teile Oxethylat aus Beispiel 2.11 werden analog Beispiel 3.1 mit 113 Teilen disproportioniertem Kolophonium verestert und anschließend mit 48.9 Teilen Maleinsäureanhydrid und daraufhin mit 62.9 Teilen Natriumsulfit in 400 Teilen Wasser umgesetzt. Das Hauptprodukt ist ein Mischester eines oxethylierten 7-Kern-Novolaks, bei dem 3 Polyoxyethylenketten mit Harzsäure verestert und 4 Polyoxyethylenketten mit Sulfobernsteinsäure halbverestert sind.

### 4. Anwendungsbeispiele

4.1) 1012 Teile 3,3′-Dichlor-4,4′-diamino-diphenyl werden mit 6000 Teilen Wasser und 2500 Volumteilen 30 %iger Salzsäure angerührt und anschließend mit 1052 Volumteilen 40 %iger Natriumnitritlösung bei 0 - 15°C bis-diazotiert. Zur Vorbereitung der Kupplungsreaktion werden 1466 Teile Acetoacetylaminobenzol in 10000 Teilen Wasser und 800 Volumteilen 33 %iger Natronlauge gelöst, mit 160 Teilen des nach Beispiel 3.3 hergestellten Tenside versetzt und durch Zugabe von 700 Volumteilen 80 %iger Essigsäure gefällt. Die Azokupplung erfolgt unter langsamem Zulaufen der hergestellten Lösung des Bis-diazoniumsalzes zur Suspension der gefällten Kupplungskomponente, wobei der pH-Wert durch laufende Zugabe von 6 %iger Natronlauge bei etwa 4,5 gehalten wird. Nach Beendigung der Kupplung wird die essigsaure Suspension auf 50°C erwärmt und mit 150 Teilen Dodecyl-benzyl-dimethyl-ammoniumchlorid, 750 Teilen Talgfettpropylendiamin und 300 Teilen Bis-(4-aminocyclohexyl)-methan versetzt. Man erhitzt auf 90 - 100°C und hält diese Temperatur eine halbe Stunde lang aufrecht. Dann wird die Mischung mit 1500 Volumteilen 33 %iger Natronlauge alkalisch gestellt und einige Stunden bei 90 - 100°C gerührt. Anschließend wird das Produkt filtriert, gewaschen, getrocknet und gemahlen. Man erhält eine Präparation von C.I. Pigment Yellow 12, die sich gut zum Pigmentieren von Tiefdruckfarben auf Toluolbasis verwenden läßt. Man erhält mit der Pigmentpräparation rotstichig-gelbe Tiefdruckfarben, die sehr gute Resultate bezüglich Farbstärke, Glanz, Transparenz und Gradationsverhalten aufweisen. Die damit pigmentierten Tiefdruckfarben zeichnen sich auch durch eine vorteilhaft niedrige Viskosität aus.

4.2) Verfährt man wie in Beispiel 4.1, doch ersetzt das Tensid aus Beispiel 3.3 durch das Tensid aus Beispiel 3.5, so erhält man eine Pigmentpräparation von Pigment Yellow 12 mit ähnlich vorteilhaften Eigenschaften.

4.3) Vergleichsbeispiel analog Beispiel 1 der EP-A-0057880 zur Herstellung einer Pigmentpräparation für Tiefdruckfarben auf Toluolbasis: Verfährt man wie in Beispiel 4.1 oder Beispiel 4.2, doch ersetzt das Tensid aus Beispiel 3.3 bzw. 3.5 durch 160 Teile Oleylaminacetat, so erhält man eine Pigmentpräparation von Pigment Yellow 12, die im Vergleich zu Beispiel 4.1 und Beispiel 4.2 in Tiefdruckfarben deutlich schlechtere Resultate bezüglich Farbstärke, Gradationsverhalten, Glanz und Transparenz aufweist.

4.4) 1396 Teile 1-Acetoacetylamino-2,4-dimethylbenzol und 341 Teile 1-Acetoacetylamino-2-methoxybenzol werden in 10000 Teilen Wasser und 830 Volumenteilen 33 %iger Natronlauge gelöst. Diese Lösung wird mit Eis auf 10°C gestellt und mit 40 Volumenteilen einer 10 %igen Lösung des Produkts (100 %ig) aus Beispiel 3.8 versetzt. Danach wird die Kupplungskomponente mit 1140 Volumenteilen 50 %iger Essigsäure gefällt. Die Kupplung erfolgt durch langsames Zulaufen einer Bis-diazoniumsalzlösung, die analog Beispiel 4.1 hergestellt wurde, zur Suspension der gefällten Kupplungskomponente, wobei der pH-Wert mit 6 %iger Natronlauge bei etwa 4,5 gehalten wird. Nach Beendigung der Kupplung wird die Pigmentsuspension mit 1100 Volumenteilen 33 %iger Natronlauge und mit einer 80°C heißen Lösung, bestehend aus 750 Teilen eines Balsamharzes, 4000 Volumenteilen Wasser und 220 Volumenteilen 33 %iger Natronlauge, versetzt. Man erhitzt auf 98°C, hält diese Temperatur für 2 Stunden und gibt dann 2000 Volumenteile normaler Salzsäure zu. Anschließend wird filtriert, gewaschen und getrocknet. Man erhält eine Pigmentpräparation, die sich hervorragend zum Einarbeiten in graphische Druckfarben eignet. Die somit pigmentierten Druckfarben zeichnen sich durch eine hohe Farbstärke und eine hohe Transparenz aus.

4.5) Verfährt man wie in Beispiel 4.4, verwendet aber anstelle des Produkts aus Beispiel 3.8 das Produkt aus Beispiel 3.10, so erhält man eine Pigmentpräparation mit ähnlich vorteilhafter Qualität wie unter 4.4 beschrieben.

4.6) Vergleichsbeispiel: Verfährt man wie in Beispiel 4.4 oder Beispiel 4.5 beschrieben, verwendet aber anstelle der 40 Volumenteile einer 10 %igen Lösung der Verbindung 3.8 bzw. 3.10 40 Volumenteile einer 10 %igen Lösung eines handelsüblichen Kupplungshilfsmittels auf Basis eines Alkylpolyglykolethers, so erhält man eine Pigmentpräparation, die im Vergleich zu den in Beispiel 4.4 oder 4.5 beschriebenen Pigmentpräparationen deutlich verminderte Farbstärke und merklich verringerte Transparenz in der graphischen Druckfarbe ergibt.

4.7) 11 Teile Dinitroanilin werden in bekannter Weise in einer Mischung aus Schwefelsäure und Salzsäure mit 10,4 Teilen 40 %iger Natriumnitritlösung diazotiert. Parallel dazu werden 8,64 Teile 2-Naphthol in einer Mischung aus 8,8 Teilen 33 %iger Natronlauge und 100 Teilen Wasser gelöst. Das 2-Naphthol wird wieder ausgefällt, indem man die erhaltene Lösung in eine Mischung aus einem Teil des Tensids aus Beispiel 3.6, 300 Teilen Wasser und 10 Teilen 31 %iger Salzsäure tropft. Die Azokupplung zum C.I. Pigment Orange 5 erfolgt sodann in bekannter Weise durch Zulauf der geklärten Diazoniumsalzlösung zur Suspension des gefällten 2-Naphthols. Anschließend wird das Pigment, filtriert, mit Wasser gewaschen und schließlich getrocknet. Das erhaltene Pigment zeichnet sich durch eine hohe Farbstärke sowohl im Buch- oder Offsetdruck als auch in wäßrigen Präparationen für Flexodruck- oder Dispersionsfarben aus. Die Druckfarben und Präparationen haben eine vorteilhaft niedrige Viskosität. Das erhaltene Pigment zeigt im Buch- und Offsetdruck guten Glanz und Transparenz.

4.8) Verfährt man wie in Beispiel 4.7, doch ersetzt das Tensid aus Beispiel 3.6 durch das Tensid aus Beispiel 3.7, so erhält man ein Pigment Orange 5 mit ähnlich vorteilhafter Qualität.

4.9) Vergleichsbeispiel: Verfährt man wie in Beispiel 4.7, doch führt die Herstellung des Pigments ohne das Tensid aus Beispiel 3.6 oder Beispiel 3.7 durch, so erhält man ein Pigment, das im Buch- und Offsetdruck wesentlich schlechtere Farbstärke, schlechteren Glanz und schlechtere Transparenz im Vergleich zu dem nach Beispiel 4.7 oder 4.8 hergestellten Pigment aufweist. Auch in den vergleichsweise hergestellten Flexodruck- oder Dispersionsfarben wird nur geringere Farbstärke und eine geringere Brillanz der Drucke erreicht.

4.10) 50 Teile Pigment Yellow 83 (C.I. Nr. 21108) werden mit 15 Teilen einer 43 %igen wäßrigen Lösung des Tensids nach Beispiel 3.3 und zusätzlich 25 Teilen Ethylenglykol und 14 Teilen Wasser in einer Rührwerkskugelmühle mit ø 1 mm Siliquarzit-Glasperlen bis zur erforderlichen Feinverteilung gemahlen. Anschließend werden dem Mahlgut noch 22 Teile Wasser zugesetzt und die dünnflüssige Pigmentdispersion über ein Sieb von den Mahlkörpern getrennt. Die 40 %ige Pigmentdispersion läßt sich in jedem Verhältnis mit Wasser verdünnen und eignet sich besonders zum Anfärben wasserhaltiger Bindemittelsysteme.

4.11) 50 Teile C.I. Pigment Red 9 (Colour-Index Nr. 12460) werden mit 14 Teilen einer 39 %igen wäßrigen Lösung des Tensids aus Beispiel 3.6, 23 Teilen Ethylenglykol und 15 Teilen Wasser in einer Rührwerkskugelmühle mit ø 1 mm Siliquarzit-Glasperlen gemahlen und anschließend mit 10 Teilen Wasser verdünnt. Die erhaltene dünnflüssige Pigmentdispersion eignet sich hervorragend zum Anfärben wäßriger Flexo- und Tiefdruckfarben und zum Pigmentieren von wäßrigen Anstrichfarben auf der Basis von Kunststoffdispersionen.

4.12) 50 Teile C.I. Pigment Blue 15 (C.I. Nr. 74160), 20 Teile einer 39 %igen wäßrigen Lösung des Tensids aus Herstellungsbeispiel 3.6, 150 Teile Ethylenglykol und 115 Teile Wasser wurden in einer Rührwerkskugelmühle mit 1 mm Siliquarzit-Glasperlen gemahlen und anschließend durch Zugabe von 40 Teilen Wasser verdünnt. Die auf diese Weise erhaltene, sehr gut fließfähige Pigmentdispersion eignet sich hervorragend für den Einsatz in wäßrigen Flexo- und Tiefdruckfarben.

4.13) 50 Teile des Dispersionsfarbstoffs 2-Methyl-3-ethoxycarbonyl-6-morpholino-10-oxopyrazolo(2,3-b)benzo(d,e)-isochinolin werden mit 40 Teilen der hergestellten Verbindung aus Beispiel 3.3 und 110 Teilen Wasser in einer Rührwerkskugelmühle 4 Stunden bis zur Feinverteilung gemahlen. Nach Zugabe von 50 Teilen Wasser erhält man einen 20 %igen Farbteig mit sehr guter Feinverteilung, der allen koloristischen Anforderungen, besonders beim Färben von Polyester, Polyester/Wolle- und Polyester/Zellwolle-Mischgespinsten genügt. Ähnlich gute Ergebnisse erhält man bei Einsatz der Verbindung aus Beispiel 3.1, 3.5 und 3.8.

4.14) 50 Teile des Dispersionsfarbstoffs 4-(2-Chlor-4-nitrophenylazo)-3-methyl-N-ethyl-N-(2-cyanoethyl)-anilin werden mit 40 Teilen des Tensids aus Beispiel 3.1 und 110 Teilen Wasser innerhalb von 3 Stunden bis zur Feinverteilung gemahlen. Die erhaltene Dispersion wird durch Zugabe von weiterem Stellmittel auf 30 % Farbstoffgehalt eingestellt und in einem Sprühtrocker zu Pulver getrocknet. Das Farbstoffpulver weist sehr gute koloristische und färbetechnische Eigenschaften auf. Ähnlich gute Ergebnisse erhält man bei der Verwendung des Tensids aus Beispiel 3.3 oder Beispiel 3.5 anstelle des eingesetzten Tensids aus Beispiel 3.1.

4.15) 100 Teile des Pflanzenschutzmittels 2-Carbomethoxyamino-benzimidazol werden mit 10 Teilen des Tensids aus Beispiel 3.9 und 10 Teilen des Tensids aus Beispiel 3.10 sowie 76 Teilen Wasser 2 Stunden bis zur Feinverteilung in einer Rührwerksmühle gemahlen. Nach der Abtrennung der Mahlkörper erhält man eine sehr stabile Dispersion mit einer guten Schwebefähigkeit ohne Bodensatz.

4.16) 73,9 Teile Methylnaphthalin werden mit 75 Teilen der 35 %igen Einstellung aus Beispiel 3.2 homogen verrührt. Das Konzentrat wird anschließend mit Wasser auf 1000 Volumenteile aufgefüllt. Man erhält eine feindisperse Carrier-Emulsion, die bei der verwendeten üblichen Verdünnung (1 : 10) eine hervorragende Stabilität besitzt und über längere Zeit verwendet werden kann.

## Patentansprüche

1. Verbindung der allgemeinen Formel (I), 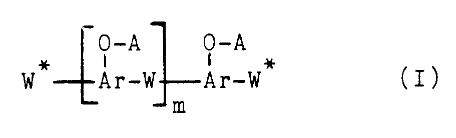 in der Ar, gleich oder verschieden von den übrigen Ar, ein Rest eines aromatischen Systems ist, der jeweils nicht weiter substituiert ist oder durch einen oder mehrere Reste aus der Gruppe gesättigtes oder ungesättigtes C₁-C₁₈-Alkyl, C₁-C₁₈-Alkoxy, C₂-C₅-Alkanoyl, C₆-C₁₀-Aryl und (C₆-C₁₀-Aryl)-C₁-C₄-Alkyl substituiert ist,
A, gleich oder verschieden von den übrigen A, eine Gruppe der Formel -(X-O)ₙ-Y, in der n eine ganze Zahl von 1 bis 150 und X, gleich oder verschieden von den übrigen X, eine Gruppe der Formel -CH₂CH₂- , -CH₂CH(CH₃)- oder -CH(CH₃)CH₂- bedeutet sowie
alle Y oder ein Teil der Reste Y, gleich oder verschieden voneinander, einen Acylrest einer unmodifizierten oder einer modifizierten Naturharzsäure und die übrigen Reste Y, gleich oder verschieden voneinander, einen Rest oder verschiedene Reste aus der Gruppe Wasserstoff, Acylrest einer gesättigten Carbonsäure mit 1 - 24 C-Atomen oder einer ungesättigten Carbonsäure mit 3 - 24 C-Atomen, einer Hydroxyfettsäure mit 2 - 24 C-Atomen, einer Alkyl-, Alkenyl- und Alkylidenbernsteinsäure mit jeweils 8 - 18 C-Atomen in der Seitenkette, sowie Acylreste der Formeln -CO-CH=CH-COOM, -COCH₂CH(SO₃M)-COOM, -CO-(CH₂)ₚ-COOM, -CO-C₆H₄-COOM und -SO₃M darstellen, wobei in den vorstehenden Formeln p eine Zahl von 0 - 14 ist und M das Äquivalent eines Kations ist,
W, gleich oder verschieden voneinander, eine divalente Gruppe der Formel -CHR- oder -CHR-N(R*)-T-N(R*)-CHR-, wobei in den vorstehenden Formeln R*, gleich oder verschieden voneinander, Wasserstoff, C₁-C₄-Alkyl, C₂-C₄-Hydroxyalkyl, einen Rest der Formel A oder -Q-O-A darstellt und dabei A die genannte Bedeutung hat und Q eine C₂-C₄-Alkylengruppe ist, R, gleich oder verschieden voneinander, Wasserstoff oder C₁-C₉-Alkyl darstellt und T, gleich oder verschieden voneinander, C₂-C₁₂-Alkylen oder C₂-C₁₂-Alkylen, das durch wenigstens eine der divalenten Gruppen -O- und -NR′-, die nicht nebeneinander stehen und worin R′ Wasserstoff, C₁-C₄-Alkyl, C₂-C₄-Hydroxyalkyl, A oder -Q-O-A ist und dabei A und Q die genannten Bedeutungen haben, unterbrochen ist, darstellt,
W*, gleich oder verschieden voneinander, Wasserstoff oder eine Gruppe der Formel -CHR-N(R*)-T-N(R*)A, in der R, R*, A und T die genannten Bedeutungen haben, und m eine ganze Zahl von 1 - 16 bedeutet.

2. Verbindung nach Anspruch 1, dadurch gekennzeichnet, daß Ar in Formel (I) ein Benzol-, Naphthalin- oder Biphenylrest ist, der nicht weiter substituiert oder durch einen C₁-C₁₂-Alkylrest oder durch Acetyl substituiert ist.

3. Verbindung nach Anspruch 1 oder 2, dadurch gekennzeichnet, daß 10 bis 50 % der Reste Y, gleich oder verschieden voneinander einen Acylrest einer unmodifizierten oder einer modifizierten Naturharzsäure bedeuten.

4. Verbindung nach einem oder mehreren der Ansprüche 1 bis 3, dadurch gekennzeichnet, daß ein Teil der Reste Y aus Resten der Formel -CO-CH=CH-COOM oder -CO-CH₂CH(SO₃M)-COOM oder beiden besteht, wobei M die in Anspruch 1 definierte Bedeutung hat.

5. Verbindung nach einem oder mehreren der Ansprüche 1 bis 4, dadurch gekennzeichnet, daß W für die Gruppe der Formel -CHR-, X für die Gruppe -CH₂CH₂-, W* für Wasserstoff oder eine Gruppe der Formel -CHR-NA-T-NA₂, n für eine Zahl von 1 bis 50 und m für eine Zahl von 3 bis 8 steht, wobei R, T und A die in Anspruch 1 definierte Bedeutung haben.

6. Verbindung nach einem oder mehreren der Ansprüche 1 bis 5, dadurch gekennzeichnet, daß 20 bis 40 % der Reste Y jeweils einen Acylrest einer unmodifizierten oder modifizierten Naturharzsäure, 0 bis 40 % der Reste Y jeweils einen Acylrest einer gesättigten oder ungesättigten Fettsäure mit 8 bis 18 C-Atomen, einer Alkyl-, Alkenyl- oder Alkylidenbernsteinsäure mit jeweils 8 bis 18 C-Atomen in der Seitenkette, Wasserstoff oder ein Gemisch davon sowie 80 bis 20 % der Reste Y jeweils eine Halbestergruppe der Maleinsäure, Sulfobernsteinsäure, Phthalsäure oder Schwefelsäure bedeuten, wobei die Prozentanteile der genannten Reste 100 % ergeben.

7. Verfahren zur Herstellung der nach einem oder mehreren der Ansprüche 1 bis 6 definierten Verbindung, dadurch gekennzeichnet, daß man Verbindungen der Formel (I) nach Anspruch 1, in der Ar, W, W*, A, X, m und n die genannten Bedeutungen haben, Jedoch Y jeweils Wasserstoff bedeutet, an allen oder an einem Teil der endständigen Hydroxygruppen mit unmodifizierten oder modifizierten Naturharzsäuren verestert und die übrigen endständigen Hydroxygruppen unmodifiziert läßt oder zumindest teilweise in einer ein- oder mehrstufigen Reaktion mit mindestens einer Verbindung oder einer Kombination von Verbindungen aus der Gruppe: gesättigte oder ungesättigte Carbonsäuren mit 1 - 24 C-Atomen, vorzugsweise Fettsäuren mit 8 - 18 C-Atomen, Hydroxycarbonsäuren mit 2 - 24 C-Atomen, vorzugsweise Hydroxyfettsäuren mit 8 - 18 C-Atomen, Alkyl-, Alkenyl- und Alkyliden-Bernsteinsäuren mit 8 - 18 C-Atomen in der Seitenkette, Säuren der Formeln HOOC-CH=CH-COOH, HOOC-(CH₂)ₚ-COOH, HOOC-C₆H₄-COOH, H₂SO₄, ClSO₃H, wobei p die genannte Bedeutung hat, und Anhydride der Verbindungen der voretehend genannten Formeln, vorzugsweise SO₃ oder Maleinsäureanhydrid in Verbindung mit einer anschließenden Umsetzung mit einem Sulfit, zu den entsprechenden Ester- oder Halbestergruppen umsetzt und die erhaltenen Verbindungen in der Säureform beläßt oder durch einen Austausch der sauren Wasserstoffatome gegen ein Äquivalent eines Kations in die entsprechende Salzform überführt.

8. Verfahren nach Anspruch 7, dadurch gekennzeichnet, daß der Austausch der Wasserstoffatome durch Neutralisation mit einer Base erfolgt und dabei die sauren Wasserstoffatome entsprechend durch ein Alkalimetallkation, ein Äquivalent eines Erdalkalimetallkations, Ammonium, eine substituierte Ammoniumgruppe mit 1 bis 4 C₁-C₄-Alkyl- oder C₁-C₄-Hydroxyalkylgruppen, oder eine Ammoniumgruppe, die durch Anlagerung von bis zu 150 Moläquivalenten Ethylenoxid oder Propylenoxid oder beide an Ammoniak oder an ein Mono-, Di- und Trialkylamin mit 1 bis 4 C-Atomen im jeweiligen Alkylrest erhalten wird, ausgetauscht werden.

9. Verwendung der nach einem oder mehreren der Ansprüche 1 bis 6 definierten Verbindung als grenzflächenaktive Mittel.

10. Verwendung nach Anspruch 9 als Kupplungshilfsmittel oder Präparationsmittel bei der Herstellung von Azofarbmitteln, als Dispergiermittel bei der Herstellung von Farbmitteldispersionen, als Präparationsmittel bei der Formulierung von Pflanzenschutz- und Schädlingsbekämpfungsmitteln, als Emulgiermittel zur Herstellung von Carrieremulsionen, als Egalisiermittel oder als Färbereihilfsmittel.

## Claims

1. A compound of the formula (I) 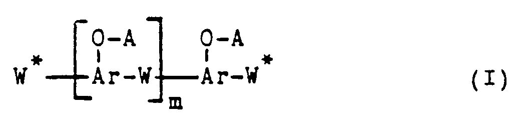 in which each radical Ar, identical to or different from the other radicals Ar, is a radical of an aromatic system which is in each case not further substituted or substituted by one or more radicals from the group consisting of saturated or unsaturated C₁-C₁₈-alkyl, C₁-C₁₈-alkoxy, C₂-C₅-alkanoyl, C₆-C₁₀-aryl and (C₆-C₁₀-aryl)-C₁-C₄-alkyl,
each radical A, identical to or different from the other radicals A, is a group of the formula -(X-O)ₙ-Y, in which n denotes an integer from 1 to 150 and each radical X, identical to or different from the other radicals X, denotes a group of the formula -CH₂CH₂-, -CH₂CH(CH₃)- or -CH(CH₃)CH₂- and
all the radicals Y or some of the radicals Y, identical to or different from one another, represent an acyl radical of a non-modified or of a modified natural resin acid and the other radicals Y, identical to or different from one another, represent a radical or various radicals from the group consisting of hydrogen, the acyl radical of a saturated carboxylic acid with 1 - 24 carbon atoms or of an unsaturated carboxylic acid with 3 - 24 carbon atoms, of a hydroxy-fatty acid with 2 - 24 carbon atoms, or of an alkyl-, alkenyl- or alkylidenesuccinic acid with in each case 8 - 18 carbon atoms in the side chain, and acyl radicals of the formulae -CO-CH=CH-COOM, -COCH₂CH(SO₃M)-COOM, -CO-(CH₂)ₚ-COOM, -CO-C₆H₄-COOM and -SO₃M, wherein, in the above formulae, p is a number from 0 to 14 and M is the equivalent of a cation, each radical W, identical to or different from one another, is a divalent group of the formula -CHR- or -CHR-N(R^{*})-T-N(R*)-CHR-, wherein, in the above formulae, each radical R*, identical to or different from one another, represents hydrogen, C₁-C₄-alkyl, C₂-C₄-hydroxyalkyl, a radical of the formula A or -Q-O-A, and A at the same time has the meaning given and Q is a C₂-C₄-alkylene group, each radical R, identical to or different from one another, represents hydrogen or C₁-C₉-alkyl and each radical T, identical to or different from one another, represents C₂-C₁₂-alkylene or C₂-C₁₂-alkylene which is interrupted by at least one of the divalent groups -O- or -NR'-, which do not stand side by side and wherein R' is hydrogen, C₁-C₄-alkyl, C₂-C₄-hydroxyalkyl, A or -Q-O-A and at the same time A and Q have the meanings given,
each radical W^{*}, identical to or different from one another, denotes hydrogen or a group of the formula -CHR-N(R*)-T-N(R*)A, in which R, R*, A and T have the meanings given, and m denotes an integer from 1 to 16.

2. A compound as claimed in claim 1, in which Ar in formula (I) is a benzene, naphthalene or biphenyl radical which is not further substituted or is substituted by a C₁-C₁₂-alkyl radical or acetyl.

3. A compound as claimed in claim 1 or 2, in which 10 to 50% of the radicals Y, identical to or different from one another, denote an acyl radical of a non-modified or modified natural resin acid.

4. A compound as claimed in one or more of claims 1 to 3, in which some of the radicals Y consist of radicals of the formula -CO-CH=CH-COOM or -CO-CH₂CH(SO₃M)-COOM or both, wherein M has the meaning as defined in claim 1.

5. A compound as claimed in one or more of claims 1 to 4, in which W stands for the group of the formula -CHR-, X stands for the group -CH₂CH₂-, W^{*} stands for hydrogen or a group of the formula -CHR-NA-T-NA₂, n stands for a number from 1 to 50 and m stands for a number from 3 to 8, wherein R, T and A have the meaning as defined in claim 1.

6. A compound as claimed in one or more of claims 1 to 5, in which 20 to 40% of the radicals Y in each case denote an acyl radical of a non-modified or modified natural resin acid, 0 to 40% of the radicals Y in each case denote an acyl radical of a saturated or unsaturated fatty acid with 8 to 18 carbon atoms or of an alkyl-, alkenyl- or alkylidenesuccinic acid with in each case 8 to 18 carbon atoms in the side chain, hydrogen or a mixture thereof and 80 to 20% of the radicals Y in each case denote a half-ester group of maleic acid, sulfosuccinic acid, phthalic acid or sulfuric acid, the percentages of the radicals mentioned making 100%.

7. A process for the preparation of a compound defined in one or more of claims 1 to 6, which comprises esterifying compounds of the formula (I) as claimed in claim 1 in which Ar, W, W*, A, X, m and n have the stated meanings, but Y in each case denotes hydrogen, on all or some of the terminal hydroxyl groups with non-modified or modified natural resin acids and leaving the remaining terminal hydroxyl groups non-modified or at least partly converting them into the corresponding ester or half-ester groups in a one- or multistage reaction with at least one compound or a combination of compounds from the group comprising: saturated or unsaturated carboxylic acids with 1 - 24 carbon atoms, preferably fatty acids with 8 - 18 carbon atoms, hydroxycarboxylic acids with 2 - 24 carbon atoms, preferably hydroxy-fatty acids with 8 - 18 carbon atoms, alkyl-, alkenyl- and alkylidene-succinic acids with 8 - 18 carbon atoms in the side chain, acids of the formulae HOOC-CH=CH-COOH, HOOC-(CH₂)ₚ-COOH, HOOC-C₆H₄-COOH, H₂SO₄ and ClSO₃H, wherein p has the meaning given, and anhydrides of the compounds of the abovementioned formulae, preferably SO₃ or maleic anhydride, with subsequent reaction with a sulfite, and leaving the resulting compounds in the acid form or converting them into the corresponding salt form by replacing the acid hydrogen atoms by one equivalent of a cation.

8. The process as claimed in claim 7, wherein the replacement of the hydrogen atoms is carried out by neutralization with a base and the acid hydrogen atoms are at the same time correspondingly replaced by an alkali metal cation, one equivalent of an alkaline earth metal cation, ammonium, a substituted ammonia group with 1 to 4 C₁-C₄-alkyl or C₁-C₄-hydroxyalkyl groups or an ammonium group which is obtained by addition of up to 150 mol equivalents of ethylene oxide or propylene oxide or both onto ammonia or onto a mono-, di- or trialkylamine with 1 to 4 carbon atoms in the particular alkyl radical.

9. The use of a compound defined in one or more of claims 1 to 6 as a surface-active agent.

10. The use as claimed in claim 9 as a coupling or formulating aid in the manufacture of azo colorants, as a dispersant in the preparation of colorant dispersions, as an aid in the formulation of plant protection agents and pesticides, as an emulsifier for the preparation of carrier emulsions, as a leveling agent or as a dyeing auxiliary.

## Revendications

1. Composé de formule générale (I) : 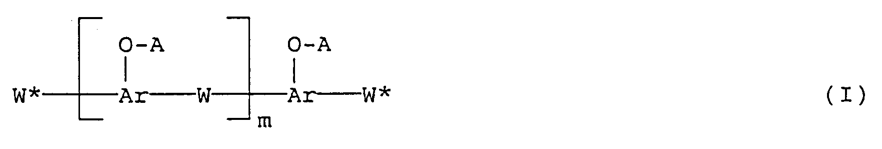 dans laquelle :
les radicaux Ar, qui sont identiques ou différents les uns des autres, représentent le résidu d'un système aromatique, qui n'est pas substitué plus avant ou qui est substitué par un ou plusieurs radicaux choisis parmi l'ensemble comprenant les radicaux saturés ou insaturés alkyle en C₁-C₁₈, alcoxy en C₁-C₁₈, alcanoyle en C₂-C₅, aryle en C₆-C₁₀ et (aryl en C₆-C₁₀)-alkyle en C₁-C₄,
les radicaux A, qui sont identiques ou différents les uns des autres, représentent chacun un groupe de formule -(X-O)ₙ-Y, dans laquelle n est un nombre entier de 1 à 150, et les radicaux X, qui sont identiques ou différents les uns des autres, représentent chacun un groupe de formule -CH₂CH₂-, -CH₂CH(CH₃)- ou -CH(CH₃)CH₂-, et
tous les radicaux Y, ou encore une partie des radicaux Y, qui sont identiques ou différents les uns des autres, représentent chacun un radical acyle d'un acide résinique dérivé d'une résine naturelle modifiée ou non modifiée, et les autres radicaux Y, qui sont identiques ou différents les uns des autres, représentent chacun un radical ou des radicaux différents choisis parmi l'ensemble comprenant l'hydrogène, les résidus acyle d'un acide carboxylique saturé ayant de 1 à 24 atomes de carbone ou d'un acide carboxylique insaturé ayant de 3 à 24 atomes de carbone, d'un acide gras hydroxylé ayant de 2 à 24 atomes de carbone, d'un acide alkyl-, alcényl- ou alkylidène-succinique ayant de 8 à 18 atomes de carbone dans la chaîne latérale, ainsi que les résidus acyle de formules -CO-CH=CH-COOM, -COCH₂CH(SO₃)M-COOM, -CO-(CH₂)ₚ-COOM, -CO-C₆H₄-COOM et -SO₃M, p, dans les formules ci-dessus, étant un nombre de 0 à 14, et M étant l'équivalent d'un cation,
les radicaux W, qui sont identiques ou différents les uns des autres, représentent chacun un groupe divalent de formule -CHR- ou -CHR-N(R*)-T-N(R^{*})-CHR-, auquel cas, dans les formules ci-dessus, les radicaux R^{*}, qui sont identiques ou différents les uns des autres, représentent chacun un hydrogène, un radical alkyle en C₁-C₄, un radical hydroxyalkyle en C₂-C₄, un radical de formule A ou -Q-O-A, où A les significations données ci-dessus et Q est un groupe alkylène en C₂-C₄,
les radicaux R, qui sont identiques ou différents les uns des autres, représentent chacun un hydrogène ou un radical alkyle en C₁-C₉, et
les radicaux T, qui sont identiques ou différents les uns des autres, représentent chacun un radical alkylène en C₂-C₁₂, ou encore un radical alkylène en C₂-C₁₂ qui est interrompu par au moins l'un des groupes divalents -O- et -NR'-, qui ne se trouvent pas l'un à côté de l'autre et dans lesquels R' est un hydrogène ou un radical alkyle en C₁-C₄ ou hydroxyalkyle en C₂-C₄, A ou -Q-O-A, A et Q ayant les significations données ci-dessus,
les radicaux W^{*}, qui sont identiques ou différents les uns des autres, représentent chacun un hydrogène ou un groupe de formule -CHR-N(R^{*})-T-N-(R^{*})A, dans laquelle R, R^{*}, A et T ont les significations données ci-dessus, et m est un nombre entier de 1 à 16.

2. Composé selon la revendication 1, caractérisé en ce que, dans la formule (I), Ar désigne un résidu benzène, naphtalène ou biphényle, qui n'est pas substitué plus avant ou est substitué par un radical alkyle en C₁-C₁₂ ou un radical acétyle.

3. Composé selon la revendication 1 ou 2, caractérisé en ce que 10 à 50 % des radicaux Y, qui sont identiques ou différents les uns des autres, représentent chacun un résidu acyle d'un acide résinique dérivé d'une résine naturelle modifiée ou non modifiée.

4. Composé selon l'une ou plusieurs des revendications 1 à 3, caractérisé en ce qu'une partie des radicaux Y sont constitués de radicaux de formule -CO-CH=CH-COOM ou -CO-CH₂CH(SO₃M)-COOM, ou les deux, M ayant les définitions données dans la revendication 1.

5. Composé selon l'une ou plusieurs des revendications 1 à 4, caractérisé en ce que W désigne le groupe de formule -CHR-, X le groupe -CH₂CH₂-, W^{*} un hydrogène ou un groupe de formule -CHR-NA-T-NA₂, n est un nombre de 1 à 50 et m est un nombre de 3 à 8, les radicaux R, T et A ayant les significations données dans la revendication 1.

6. Composé selon l'une ou plusieurs des revendications 1 à 5, caractérisé en ce que 20 à 40 % des radicaux Y représentent chacun un résidu acyle d'un acide résinique dérivé d'une résine naturelle modifiée ou non modifiée, 0 à 40 % des radicaux Y représentent chacun un résidu acyle d'un acide gras saturé ou insaturé ayant de 8 à 18 atomes de carbone, d'un acide alkyl-, alcényl- ou alkylidènesuccinique ayant de 8 à 18 atomes de carbone dans la chaîne latérale, un hydrogène ou un de leurs mélanges, et 80 à 20 % des radicaux Y représentent chacun un groupe semi-ester de l'acide maléique, de l'acide sulfosuccinique, de l'acide phtalique ou de l'acide sulfurique, la somme des pourcentages des résidus mentionnés ci-dessus étant égale à 100 %.

7. Procédé pour préparer le composé selon l'une ou plusieurs des revendications 1 à 6, caractérisé en ce qu'on estérifie des composés de formule (I), dans laquelle Ar, W, W*, A, X, m et n ont les significations données ci-dessus mais Y représente dans chaque cas un hydrogène, sur tout ou partie des groupes hydroxyle terminaux, avec des acides dérivés d'une résine naturelle non modifiée ou modifiée, et on laisse non modifiés les groupes hydroxy terminaux restants, ou bien encore on les fait réagir au moins partiellement, dans le cadre d'une réaction en une ou plusieurs étapes, avec au moins un composé ou une combinaison de composés choisis parmi l'ensemble comprenant les acides carboxyliques éventuellement saturés ayant de 1 à 24 atomes de carbone, de préférence les acides gras ayant de 8 à 18 atomes de carbone, les acides hydroxycarboxyliques ayant de 2 à 24 atomes de carbone, de préférence les acides gras hydroxylés ayant de 8 à 18 atomes de carbone, les acides alkyl-, alcényl- et alkylidènesucciniques ayant de 8 à 18 atomes de carbone dans la chaîne latérale, les acides de formules HOOC-CH=CH-COOH, HOOC-(CH₂)ₚ-COOH, HOOC-C₆H₄-COOH, H₂SO₄, ClSO₃H, où p a les significations déjà données, et les anhydrides des composés ayant les formules données ci-dessus, de préférence SO₃ ou l'anhydride maléique, en association avec une réaction ultérieure avec un sulfite, pour donner les groupes ester ou semi-ester correspondants, et on laisse les composés obtenus sous forme acide, ou encore qu'on les convertit en la forme sel correspondante, par remplacement des atomes d'hydrogène acides par un équivalent d'un cation.

8. Procédé selon la revendication 7, caractérisé en ce que l'échange des atomes d'hydrogène est réalisé par neutralisation avec une base, les atomes d'hydrogène acides étant alors remplacés par un cation d'un métal alcalin, un équivalent d'un cation d'un métal alcalinoterreux, un ammonium, un groupe ammonium substitué comportant 1 à 4 groupes alkyle en C₁-C₄ ou hydroxyalkyle en C₁-C₄, ou encore un groupe ammonium, que l'on obtient par fixation d'un nombre allant jusqu'à 150 équivalents molaire d'oxyde d'éthylène ou d'oxyde de propylène, ou des deux, sur de l'ammoniac ou sur une mono-, une di- ou une trialkylamine ayant de 1 à 4 atomes de carbone dans le résidu alkyle.

9. Utilisation du composé selon l'une ou plusieurs des revendications 1 à 6, en tant que composé tensio-actif.

10. Utilisation selon la revendication 9, comme auxiliaire de copulation ou agent de préparation lors de la réalisation de colorants azoïques, comme dispersant lors de la préparation de dispersions de colorants, comme agent de préparation lors de la formulation de produits phytosanitaires et pesticides, comme émulsifiant pour préparer des émulsions-supports, comme agent d'unisson ou comme auxiliaire de teinture.
